# EUROPÄISCHE PATENTSCHRIFT

(11) **EP 1 527 110 B1**
(45) Veröffentlichungstag und Bekanntmachung des Hinweises auf die Patenterteilung: **25.10.2006**
(21) Anmeldenummer: 03720332.0
(22) Anmeldetag: 14.03.2003
(51) Int. Cl.: C08F 210/06

(54) **WEICHE FLAMMWIDRIGE WICKELFOLIE**
SOFT FLAME-RESISTANT WINDING FILM
FILM D'ENROULEMENT SOUPLE ININFLAMMABLE

(30) Priorität: 11.04.2002 DE 10216078
(43) Veröffentlichungstag der Anmeldung: 04.05.2005
(73) Patentinhaber: tesa AG, 20253 Hamburg (DE)
(72) Erfinder: MÜSSIG, Bernhard, 21218 Seevetal (DE); NEUBERT, Ingo, 22850 Norderstedt (DE)
(86) Internationale Anmeldenummer: PCT/EP2003/002663
(87) Internationale Veröffentlichungsnummer: WO 2003/085012

(56) Entgegenhaltungen:
- EP-A- 0 368 243
- EP-A- 0 469 354
- EP-A- 0 508 415
- EP-A- 1 097 976
- WO-A-96/25469
- WO-A-99/35202
- DE-A- 3 527 436
- JP-A- 7 330 986
- JP-A- 8 112 554
- JP-A- 8 112 555
- JP-A- 52 062 348
- JP-A- 2000 336 328
- US-A- 3 823 255
- US-A- 5 116 898
- US-A1- 2002 015 847
- US-B1- 6 235 658
- DIN EN ISO 527-1
- DIN EN ISO 527-3

## Beschreibung

Die vorliegende Erfindung betrifft eine insbesondere weiche halogenfreie flammwidrige Wickelfolie aus Polypropylencopolymer, die optional mit einer haftklebrigen Beschichtung versehen ist, die zum Beispiel zum Umwickeln von Lüftungsleitungen in Klimaanlagen, Drähten oder Kabeln eingesetzt wird und die insbesondere für Kabelbäume in Fahrzeugen oder Feldspulen für Bildröhren geeignet ist. Die Wickelfolie dient dabei zum Bündeln, Isolieren, Markieren, Abdichten oder Schützen. Des weiteren umfaßt die Erfindung Verfahren zur Herstellung der erfindungsgemäßen Folie.

### Stand der Technik

Kabelwickelbänder und Isolierbänder bestehen üblicherweise aus weichgemachter PVC-Folie mit einer einseitigen Haftkleberbeschichtung. Es besteht verstärkt der Wunsch, Nachteile dieser Produkte zu beseitigen. Entsprechende Nachteile beinhalten Ausdampfung von Weichmacher und hoher Halogengehalt.

Die Weichmacher konventioneller Isolierbänder und Kabelwickelbänder dampfen allmählich aus, was zu einer Gesundheitsbelastung führt, insbesondere ist das üblicherweise verwendete DOP bedenklich. Weiterhin schlagen sich die Dämpfe in Kraftfahrzeugen an den Scheiben nieder, was die Sicht (und damit erheblich die Fahrsicherheit) verschlechtert und vom Fachmann als Fogging (DIN 75201) bezeichnet wird. Bei noch stärkerer Verdampfung durch höhere Temperaturen, zum Beispiel im Motorinnenraum von Fahrzeugen oder bei Isolierbändern in elektrischen Geräten, versprödet die Wickelfolie durch den entstehenden Weichmacherverlust.

Weichmacher verschlechtern das Brandverhalten des reinen PVCs, was durch Zugabe von Antimonverbindungen, die toxisch sehr bedenklich sind, oder durch Verwendung chlor- oder phosphorhaltiger Weichmacher teilweise kompensiert wird.

Vor dem Hintergrund der Diskussion um Verbrennung von Kunststoffabfällen, zum Beispiel Shredderabfall aus dem Fahrzeugrecycling, besteht der Trend zur Reduktion des Halogengehaltes und damit der Dioxinentstehung. Daher werden bei den Kabelisolierungen die Wandstärken und bei den zum Umwickeln verwendeten Bändern die Dicken der PVC-Folie reduziert. Die übliche Dicke der PVC-Folien für Wickelbänder beträgt 85 bis 200 µm. Unterhalb von 85 µm treten erhebliche Probleme im Kalanderprozeß auf, so daß solche Produkte mit vermindertem PVC-Gehalt kaum verfügbar sind.

Die üblichen Wickelbänder enthalten Stabilisatoren auf Basis giftiger Schwermetalle, zumeist Blei, seltener Cadmium oder Barium.

Stand der Entwicklung zum Bandagieren von Leitungssätzen sind Wickelfolien mit und ohne Klebstoffbeschichtung, die aus einem PVC-Trägermaterial bestehen, das durch Einarbeitung von erheblichen Mengen (30 bis 40 Gew.-%) an Weichmacher flexibel eingestellt ist. Das Trägermaterial ist zumeist einseitig mit einer Selbstklebemasse auf Basis von SBR-Kautschuk beschichtet. Erhebliche Mängel dieser PVC-Wickelklebebänder sind ihre geringe Alterungsstabilität, das Auswandern und Verdunsten von Weichmacher, ihr hoher Halogengehalt sowie eine hohe Rauchgasdichte im Brandfall. In JP 10 001 583 A1, JP 05 250 947 A1, JP 2000 198 895 A1 und JP 2000 200 515 A1 werden typische Weich-PVC-Klebebänder beschrieben. Um eine höhere Flammfestigkeit der Weich-PVC-Materialien zu erreichen, wird üblicherweise, wie zum Beispiel in JP 10 001 583 A1 beschrieben, die stark toxische Verbindung Antimonoxid verwendet.

Es gibt Bemühungen, statt Weich-PVC-Folie Gewebe oder Vliese zu verwenden, die daraus resultierenden Produkte werden aber in der Praxis nur wenig eingesetzt, da sie relativ teuer sind und sich in der Handhabung (zum Beispiel Handeinreißbarkeit, elastisches Rückstellvermögen) und unter Nutzungsbedingungen (zum Beispiel Beständigkeit gegen Betriebsflüssigkeiten, elektrische Eigenschaften) stark von den gewohnten Produkten unterscheiden, wobei im folgenden ausgeführt der Dicke eine besondere Bedeutung zukommt.

In DE 200 22 272 U1, EP 1 123 958 A1 und WO 99/61541 A1 sind Wickelklebebänder aus einem gewebe- oder vliesartigem Trägermaterial beschrieben. Diese Materialen zeichnen sich durch eine sehr hohe Reißfestigkeit aus. Daraus resultiert jedoch der Nachteil, daß diese Klebebänder bei der Verarbeitung nicht ohne Zuhilfenahme von Scheren oder Messern von Hand abgerissen werden können. Die Dehnbarkeit und Flexibilität sind zwei der Hauptanforderungen an die Wickelklebebänder, um faltenfreie und biegsame Kabelbäume herstellen zu können. Des weiteren erfüllen diese Materialen nicht die einschlägigen Brandschutznormen wie FMVSS 302. Verbesserte Brandeigenschaften können nur unter Verwendung von halogenhaltigen Flammschutzmitteln oder Polymeren wie in US 4,992,331 A1 beschrieben realisiert werden.

Im modernen Fahrzeugbau werden die Kabelbäume einerseits durch die Vielzahl der elektrischen Verbraucher und dem vermehrten Informationstransfer innerhalb der Fahrzeuge immer dicker und steifer, während andererseits der Verbauraum immer stärker reduziert und somit die Montage (Durchführung beim Verlegen in der Karosserie) problematischer wird. Dadurch ist ein dünnes Folientape vorteilhaft. Des weiteren wird für eine effiziente und kostengünstige Kabelbaumherstellung von den Kabelwickelbändern eine leichte und schnelle Verarbeitbarkeit erwartet.

Wickelbänder auf Basis von Weich-PVC-Folien werden in Automobilen zur Bandagierung von elektrischen Leitungen zu Kabelbäumen eingesetzt. Stand in den Anfängen der technischen Entwicklung die Verbesserung der elektrischen Isolation bei Verwendung dieser ursprünglich als Isolierbänder entwickelten Wickelbänder im Vordergrund, müssen derartige Kabelsatzbänder mittlerweile weitere Funktionen erfüllen, wie die Bündelung und dauerhafte Fixierung einer Vielzahl von Einzelkabeln zu einem stabilen Kabelstrang, sowie den Schutz der Einzelkabel und des gesamten Kabelstrangs gegen mechanische, thermische und chemische Schäden.

In DE 199 10 730 A1 wird ein Laminatträger beschrieben, der aus Velours oder Schaumstoff und einem Vlies besteht, welcher mittels eines doppelseitigen Klebebandes oder mit einem Schmelzkleber adhäsiv verbunden ist.

EP 0 886 357 A2 beschreibt eine dreilagige Schutzummantelung aus einem Spinnfaservlies, einem PET-Gewirke sowie einem Schaumstoff- oder Filzstreifen, die zusammenkaschiert sind, wobei die Schutzummantelung zusätzlich noch sehr aufwendig mit Klebestreifen und Klettverschlußsystemen zumindest partiell versehen ist.

In EP 1 000 992 A1 wird ein gelochtes Baumwolle-Vlies mit einer 10 bis 45 µm dicken Polyethylenbeschichtung sowie einer zusätzlichen Releasebeschichtung beschrieben.

Die DE-G 94 01 037 beschreibt ein Klebeband mit einem bandförmigen, textilen Träger, der aus einem Nähvlies besteht, das seinerseits aus einer Vielzahl parallel zueinander laufender, eingenähter Nähte gebildet wird. Das hier vorgeschlagene Vlies soll bei einem Flächengewicht von 50 bis 200 g/m² eine Dicke von 150 bis 400 µm aufweisen.

Die DE 44 42 092 C1 beschreibt ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf sogenannten Kunit- beziehungsweise Multiknitvliesen. In allen drei Dokumenten werden dabei Vliese eingesetzt, die ein Flächengewicht von ungefähr 100 g/m² aufweisen, wie man den Beispielen entnehmen kann.

Aus der DE 195 23 494 C1 ist die Verwendung eines Klebebandes mit einem Träger aus Vliesmaterial einer Dicke von 400 bis 600 µm zum Bandagieren von Kabelbäumen bekannt, das einseitig mit einem Kleber beschichtet ist.

Aus der DE 199 23 399 A1 ist ein Klebeband mit einem bandförmigen Träger aus Vliesmaterial bekannt, das zumindest einseitig mit einem Kleber beschichtet ist, wobei das Vlies eine Dicke von 100 µm bis 3000 µm, insbesondere 500 bis 1000 µm aufweist.

Derartig dicke Vliese machen die Kabelbäume noch dicker und unflexibler als klassische PVC-Tapes, auch wenn dies sich positiv auf die Schalldämmung auswirkt, was nur in einigen Bereichen von Kabelbäumen von Vorteil ist. Vliese sind aber wenig dehnbar und weisen praktisch kein Rückstellvermögen auf. Dies ist von Bedeutung, da dünne Äste von Kabelbäumen so stramm gewickelt sein müssen, daß sie beim Einbau nicht schlaff herunterhängen und sich leicht vor den Anclipsen und Anbau der Stecker positionieren lassen.

Ein weiterer Nachteil von Textilklebebändern ist die geringe Durchschlagspannung von ca. 1 kV, weil nur die Klebstoffschicht isoliert. Folienbänder hingegen liegen über 5 kV, sie sind gut spannungsbeständig.

Wickelfolien und Kabelisolierungen aus thermoplastischem Polyester werden versuchsweise zur Herstellung von Kabelbäumen verwendet. Diese weisen erhebliche Mängel bezüglich ihrer Flexibilität, Verarbeitbarkeit, Alterungsbeständigkeit oder Kompatibilität zu den Kabelmaterialen auf. Der schwerwiegendste Nachteil von Polyester ist jedoch die erhebliche Hydrolyseempfindlichkeit, so daß ein Einsatz aus Sicherheitsgründen in Automobilen nicht in Frage kommt.
In DE 100 02 180 A1, JP 10 149 725 A1, JP 09 208 906 A1 und JP 05 017 727 A1 wird der Einsatz von halogenfreien thermoplastischen Polyester-Trägerfolien beschrieben. In JP 07 150 126 A1 wird eine flammwidrige Wickelfolie aus einer Polyester-Trägerfolie beschrieben, welche ein bromiertes Flammschutzmittel enthält.

In der Patentliteratur werden auch Wickelbänder aus Polyolefinen beschrieben. Diese sind jedoch leicht entflammbar oder enthalten halogenhaltige Flammschutzmittel. Darüber hinaus weisen die aus Ethylencopolymeren hergestellten Materialien einen zu geringen Erweichungspunkt auf (sie schmelzen in der Regel schon bei dem Versuch, eine Wärmealterungsbeständigkeit zu prüfen), und im Fall der Verwendung von Polypropylenpolymeren ist das Material zu unflexibel.

In der WO 00/71634 A1 wird ein Wickelklebeband beschrieben, dessen Folie aus einem Ethylen-Copolymer als Basismaterial besteht. Die Trägerfolie enthält das halogenhaltige Flammschutzmittel Decabromdiphenyloxid. Die Folie erweicht unterhalb einer Temperatur von 95 °C, die normale Nutzungstemperatur liegt aber oft oberhalb von 100 °C oder kurzzeitig sogar über 130 °C, was bei der Verwendung im Motorinnenraum keine Seltenheit ist.

In der WO 97/05206 A1 wird ein halogenfreies Wickelklebeband beschrieben, dessen Trägerfolie aus einem Polymerblend aus Polyethylen niederer Dichte und einem Ethylen/Vinylacetat- oder Ethylen/Acrylat-Copolymer besteht. Als Flammschutzmittel werden 20 bis 50 Gew.-% Aluminumhydroxid oder Ammoniumpolyphosphat verwendet. Ein erheblicher Nachteil der Trägerfolie ist wiederum die geringe Erweichungstemperatur.
Um dem entgegen zu wirken, wird die Verwendung von Silan-Vernetzung beschrieben.

Diese Vernetzungsmethode führt aber nur zu sehr ungleichmäßig vernetztem Material, so daß sich in der Praxis kein stabiler Produktionsprozeß beziehungsweise gleichmäßige Qualität des Produktes realisieren läßt.

Analoge Probleme der mangelnden Wärmeformbeständigkeit treten bei den in WO 99/35202 A1 und US 5,498,476 A1 beschriebenen Elektroklebebändern auf. Als Trägerfolienmaterial wird ein Blend aus EPDM und EVA in Kombination mit Ethylendiaminphosphat als Flammschutzmittel beschrieben. Dieses weist wie auch Ammoniumpolyphosphat eine hohe Hydrolyseempfindlichkeit auf. In Kombination mit EVA tritt zudem eine Versprödung bei Alterung auf. Die Anwendung auf üblichen Kabeln aus Polyolefin und Aluminium- oder Magnesiumhydroxid führt zu schlechter Verträglichkeit. Darüber hinaus ist das Brandverhalten solcher Kabelbäume schlecht, da diese Metallhydroxide mit Phosphorverbindungen wie unten ausgeführt antagonistisch wirken. Die beschriebenen Isolierbänder sind für Kabelbaumwickelbänder zu dick und zu steif.

Versuche, das Dilemma aus zu niedriger Erweichungstemperatur, Flexibilität und Halogenfreiheit zu lösen, beschreiben nachfolgende Patente.

Die EP 0 953 599 A1 beansprucht eine Polymermischung aus LLDPE und EVA für Anwendungen als Kabelisolierungen und als Folienmaterial. Als Flammschutzmittel wird eine Kombination aus Magnesiumhydroxid mit spezieller Oberfläche und rotem Phosphor beschrieben, die Erweichung bei relativ niedriger Temperatur wird jedoch in Kauf genommen.

Eine sehr ähnliche Kombination wird in EP 1 097 976 A1 beschrieben. Hier wird allerdings zur Verbesserung der Wärmeformbeständigkeit anstatt dem LLDPE ein PP-Polymer verwendet, welches eine höhere Erweichungstemperatur hat. Nachteil ist jedoch die daraus resultierende geringe Flexibilität. Für die Abmischung mit EVA oder EEA wird behauptet, daß die Folie eine hinreichende Flexibilität aufweist. Dem Fachmann ist jedoch aus der Literatur bekannt, daß diese Polymere zur Verbesserung des Flammschutzes mit Polypropylen abgemischt werden. Die beschriebenen Produkte weisen eine Foliendicke von 0,2 mm auf, allein diese Dicke schließt bei gefüllten Polyolefinfolien eine Flexibilität aus, da diese in der 3. Potenz von der Dicke abhängt. Das beschriebene Verfahren der Extrusion ist bei den extrem niedrigen Schmelzindices der verwendeten Polypropylene, wie dem Fachmann bekannt, auf einer Produktionsanlage kaum durchführbar, erst recht nicht für eine praxisgerechte dünne Folie und erst recht nicht bei Verwendung in Kombination mit den beschriebenen hohen Mengen an Füllstoff.

Beide Lösungsansätze bauen auf die bekannte synergistische Flammschutzwirkung des roten Phosphors mit Magnesiumhydroxid. Die Verwendung von elementarem Phosphor birgt jedoch erhebliche Nachteile und Gefahren. Bei der Verarbeitung wird übelriechendes und hochgiftiges Phosphin freigesetzt. Ein weiterer Nachteil ergibt sich aus dem Entstehen von sehr dichtem weißen Rauch im Brandfall. Darüber hinaus sind nur braune bis schwarze Produkte herstellbar, Wickelfolien werden zwecks Farbkennzeichnung jedoch in einem breiten Farbsortiment verwendet.

Die JP 2001 049 208A1 beschreibt eine öl- und wärmebeständige Folie für ein Klebeband, bei welcher beide Schichten aus einer Mischung von EVA oder EEA, Peroxidvernetzer, Silanvernetzer, Katalysator für die Silanolkondensation und Flammschutzmittel zusammengesetzt sind und eine der Schichten zusätzlich Polypropylen enthält. Diese Folie löst weder das Problem der schlechten Flexibilität einer gefüllten Polypropylenfolie noch das der hohen Anforderungen an die Alterungsbeständigkeit.

JP 09 310 048 A1 beschreibt einen Folienträger aus Polyolefin, Flammschutzmittel, HALS-Lichtschutzmittel und Hydrotacit als Säurefänger für das EVA. Diese Folie hat weder eine hohe Flexibilität einer gefüllten Polypropylenfolie noch eine hohe die Alterungsbeständigkeit zum Ziel.

Die genannten Patentschriften zum Stand der Technik führen trotz der genannten Nachteile keine Folien auf, die auch noch die weiteren Anforderungen wie Handeinreißbarkeit, Wärmebeständigkeit, Kompatibilität mit Polyolefinkabelisolierung oder hinreichender Abrollkraft lösen. Darüber hinaus bleiben die Verarbeitbarkeit in Folienherstellprozessen, hoher Fogging-Wert und die Durchschlagsspannungsfestigkeit fraglich.

Die Aufgabe bleibt daher das Auffinden einer Lösung für eine Wickelfolie, welche die Vorteile der Flammwidrigkeit, Abriebfestigkeit, Spannungsbeständigkeit und den mechanischen Eigenschaften (wie Elastizität, Flexibilität, Handeinreißbarkeit) von PVC-Wickelbändern mit der Halogenfreiheit von textilen Wickelbändern verbindet und darüber hinaus eine überlegene Wärmealterungsbeständigkeit aufweist, wobei eine großtechnische Produzierbarkeit der Folie sichergestellt sein muß und eine hohe Durchschlagsspannungsfestigkeit und ein hoher Fogging-Wert bei einigen Anwendungen notwendig ist.

Aufgabe der Erfindung ist es, weiche halogenfreie flammwidrige Wickelfolien zur Verfügung zu stellen, welche ein besonders sicheres und schnelles Umwickeln, insbesondere von Drähten und Kabeln, zum Markieren, Schützen, Isolieren, Abdichten oder Bündeln ermöglichen, wobei die Nachteile des Standes der Technik nicht oder zumindest nicht in dem Umfang auftreten.

Im Zuge der immer komplizierter werdenden Elektronik und der steigenden Zahl von elektrischen Verbrauchern in den Automobilen werden auch die Leitungssätze immer komplexer. Bei steigenden Querschnitten der Kabelbäume wird die induktiven Erhitzung immer größer während die Wärmeableitung abnimmt. Dadurch steigen die Anforderungen an die Wärmebeständigkeit der verwendeten Materialien. Die standardmäßig verwendeten PVC-Materialien für die Wickelklebebänder stoßen hier an ihre Grenzen. Es bestand daher auch die Aufgabe, Polypropylencopolymere mit Additivkombinationen zu finden, welche die Wärmebeständigkeit von PVC nicht nur erreichen sondern sogar übertreffen.

Gelöst wird diese Aufgabe durch eine Wickelfolie, wie sie im Hauptanspruch niedergelegt ist. Gegenstand der Unteransprüche sind vorteilhafte Weiterbildungen der erfindungsgemäßen Wickelfolie, wie ein weiches flammwidriges Klebeband, Anwendungen derselben sowie Verfahren zur Herstellung der Wickelfolie.

Demgemäß betrifft die Erfindung eine weiche halogenfreie flammwidrige Wickelfolie aus Polypropylencopolymer mit einem Kristallitschmelzpunkt von unter 166 °C, was insbesondere durch Verwendung eines Polypropylencopolymers mit einem Biegemodul von 80 MPa oder weniger erreicht wird.

Die im folgenden gemachten Angaben in phr bedeuten Gewichtsteile der betreffenden Komponente bezogen auf 100 Gewichtsteile aller Polymerkomponenten der Folie.

Bei einer Wickelfolie mit Beschichtung (zum Beispiel mit Klebstoff) werden nur die Gewichtsteile aller Polymerkomponenten der Polypropylencopolymer-haltigen Schicht berücksichtigt. Die erfindungsgemäße Wickelfolie enthält mindestens 40 phr Flammschutzmittel.

Die Dicke der erfindungsgemäßen Folie liegt im Bereich von 30 bis 180 µm, bevorzugt 50 bis 150 µm, insbesondere 55 bis 100 µm. Die Oberfläche kann strukturiert oder glatt sein. Vorzugsweise ist die Oberfläche leicht matt eingestellt. Dies kann durch Verwendung eines Füllstoffs mit einer hinreichend hohen Teilchengröße oder durch eine Walze (zum Beispiel Prägewalze am Kalander oder mattierte Chill Roll oder Prägewalze bei der Extrusion) erreicht werden.

In bevorzugter Ausführung ist die Folie ein- oder beidseitig mit einer haftklebrigen Schicht ausgerüstet, um die Anwendung einfach zu gestalten, so daß eine Fixierung der Wickelfolie am Ende des Wickelvorgangs entfällt.

Die erfindungsgemäße Wickelfolie ist im wesentlichen frei von flüchtigen Weichmachern wie zum Beispiel DOP oder TOTM und hat daher ein ausgezeichnetes Brandverhalten und geringe Emission (Weichmacherausdampfung, Fogging).

Für den Fachmann überraschend und nicht vorhersehbar ist eine solche Wickelfolie aus Polypropylencopolymer und flammhemmenden Füllstoffen herstellbar. Erstaunlicherweise ist auch die thermische Alterungsbeständigkeit im Vergleich zu PVC als Hochleistungswerkstoff nicht schlechter sondern vergleichbar oder sogar besser.

Die erfindungemäße Wickelfolie weist in Längsrichtung eine Kraft bei 1 % Dehnung von 0,6 bis 4 N/cm auf, vorzugsweise von 1 bis 3 N/cm, und bei 100 % Dehnung eine Kraft von 2 bis 20 N/cm, vorzugsweise von 3 bis 10 N/cm.

Insbesondere ist die Kraft bei 1 % Dehnung größer gleich 1 N/cm und die Kraft bei 100 % Dehnung kleiner oder gleich 15 N/cm.

Die 1 %-Kraft ist ein Maß für die Steifigkeit der Folie, und die 100 %-Kraft ist ein Maß für die Anschmiegsamkeit beim Wickeln bei starker Deformation durch hohe Wickelspannung. Die 100 %-Kraft darf aber auch nicht zu niedrig liegen, weil sonst die Reißfestigkeit zu gering ist.

Zur Erreichung dieser Kraftwerte enthält die Wickelfolie vorzugsweise mindestens ein Polypropylencopolymer mit einem Biegemodul von weniger als 500 MPa, bevorzugt 80 MPa oder weniger und insbesondere von 30 MPa oder weniger.

Der bevorzugte Schmelzindex liegt für die Kalanderverarbeitung unter 5 g/10 min, vorzugsweise unter 1 g/10 min und insbesondere unter 0,7 g/10 min. Für die Extrusionsverarbeitung liegt der bevorzugte Schmelzindex zwischen 1 und 20 g/10 min, insbesondere zwischen 5 und 15 g/10 min.

Der Kristallitschmelzpunkt des Polypropylencopolymers liegt unter 166 °C, bevorzugt unter 148 °C, besonders vorzugsweise unter 145 °C. Ganz besonders vorzugsweise liegt der Kristallitschmelzpunkt zwischen 120 °C und 166 °C.
Der kristalline Bereich des Copolymers ist vorzugsweise ein Polypropylen mit Randomstruktur, insbesondere mit einem Gehalt von 6 bis 10 Mol.-% Ethylen. Ein (zum Beispiel mit Ethylen) modifiziertes Polypropylenrandomcopolymer weist je nach Blocklänge des Polypropylens und Comonomergehalt der amorphen Phase einen Kristallitschmelzpunkt zwischen 100 °C und 145 °C auf (das ist der Bereich für kommerzielle Produkte). Ein Polypropylenhomopolymer liegt je nach Molekulargewicht und Taktizität zwischen 163 °C bis 166 °C. Hat das Homopolymer ein niedriges Molekulargewicht und ist es mit EP-Kautschuk (zum Beispiel Pfropfung, Reaktorblend) modifiziert, so führt die Schmelzpunktserniedrigung zu einem Kristallitschmelzpunkt im Bereich von etwa 148 °C bis 163 °C. Für das erfindungsgemäße Polypropylencopolymer liegt daher der bevorzugte Kristallitschmelzpunkt unter 145 °C und wird am besten mit einem Comonomer-modifierten Polypropylen mit Randomstruktur in der kristallinen Phase und copolymerer amorpher Phase erreicht.

Solche Copolymere weisen einen Zusammenhang zwischen dem Comonomergehalt sowohl in der kristallinen und als auch in der amorphen Phase, dem Biegemodul und dem 1 %-Spannungswert der daraus hergestellten Wickelfolie auf. Ein hoher Comonomergehalt in der amorphen Phase ermöglicht einen besonders niedrigen 1 %-Kraftwert. Überraschenderweise hat ein Gehalt an Comonomer in der auch in der harten kristallinen Phase einen positiven Einfluß auf die Flexibilität der gefüllten Folie.

Der Kristallitschmelzpunkt soll aber nicht unter 120 °C liegen, wie es bei EPM und EPDM der Fall ist, weil bei Anwendungen auf Lüftungsrohren, Bildschirmspulen oder Fahrzeugkabeln die Gefahr des Schmelzens besteht. Wickelfolien aus Ethylen-Propylen-Copolymeren aus den Klassen der EPM und EPDM sind daher nicht erfindungsgemäß, was aber nicht ausschließt, daß solche Polymere zur Feinstellung der mechanischen Eigenschaften neben dem erfindungsgemäßen Polypropylencopolymer verwendet werden.

Dem/den Comonomeren des Propylens im Polypropylencopolymer werden keine Beschränkungen auferlegt, bevorzugt werden jedoch α-Olefine wie Ethylen, Butylen-(1), Isobutylen, 4-Methyl-1-penten, Hexen oder Octen verwendet. Copolymere mit drei oder mehr Comonomeren sind im Sinn dieser Erfindung eingeschlossen. Es werden als Monomere für das Polypropylencopolymer Propylen und Ethylen besonders bevorzugt. Das Polymer kann weiterhin durch Pfropfung, zum Beispiel mit Maleinsäureanhydrid oder Acrylatmonomeren, zum Beispiel zur Verbesserung des Verarbeitungsverhaltens oder der mechanischen Eigenschaften modifiziert sein. Unter Polypropylencopolymer werden nicht nur Copolymere im strengen Sinne der Polymerphysik wie zum Beispiel Blockcopolymere verstanden, sondern auch handelsübliche thermoplastische PP-Elastomere mit unterschiedlichsten Strukturen oder Eigenschaften. Solche Materialien können beispielsweise aus PP-homo- oder Randomcopolymeren als Vorstufe durch weitere Umsetzung mit Ethylen und Propylen in der Gasphase im gleichen Reaktor oder in nachfolgenden Reaktoren hergestellt werden. Beim Einsatz von Randomcopolymer als Ausgangsmaterial ist die Monomerenverteilung von Ethylen und Propylen in der sich bildenden EP-Kautschukphase gleichmäßiger, was zu besseren mechanischen Eigenschaften führt. Dies ist ein weiterer Grund, warum für die erfindungsgemäße Wickelfolie ein Polymer mit kristalliner Randomcopolymerphase bevorzugt wird. Für die Herstellung können gängige Verfahren angewendet werden, als Beispiele seien der Gasphasen-, Cataloy-, Spheripol-, Novolen-, und der Hypol-Prozeß genannt, welche in Ullmann's Encyclopedia of Industrial Chemistry, 6. Aufl., Wiley-VCH 2002 beschrieben sind.

Geeignete Abmischkomponenten sind zum Beispiel weiche Ethylencopolymere wie LDPE, LLDPE, Metallocen-PE, EPM oder EPDM mit einer Dichte von 0,86 bis 0,92 g/cm³ vorzugsweise von 0,86 bis 0;88 g/cm³. Auch weiche hydrierte Random- oder Blockcopolymere aus Ethylen oder (gegebenenfalls substituiertem) Styrol und Butadien oder Isopren sind geeignet die Flexibilität, die Kraft bei 1 % Dehnung und insbesondere die Form der Kraft-Dehnungs-Kurve der Wickelfolie in den optimalen Bereich zu bringen. Wird neben dem erfindungsgemäßen Polypropylencopolymer ein weiteres ethylen- oder propylenhaltiges Copolymer eingesetzt hat dieses vorzugsweise einen spezifizierten Schmelzindex im Bereich von ± 50 % des Schmelzindex des Polypropylencopolymers. Dabei bleibt unberücksichtigt, daß der Schmelzindex ethylenhaltiger Copolymere in der Regel für 190 °C und nicht wie bei Polypropylen für 230 °C spezifiziert ist.

Durch Zugabe von Ethylencopolymeren mit carbonylgruppenhaltigen Monomeren wie Ethylenacrylat (zum Beispiel EMA, EBA, EEA, EAA) oder Ethylenvinylacetat kann, wie dem Fachmann geläufig ist, das Brandverhalten von PP-Polymeren verbessert werden. Dies gilt auch für die erfindungsgemäße Wickelfolie mit einem Polymer mit den hier speziell geforderten Eigenschaften. Darüber hinaus wird festgestellt und beansprucht, daß auch Polyethylenvinylalkohol und olefinfreie stickstoff- oder sauerstoffhaltige Polymere als Synergisten geeignet sind, zum Beispiel in Form von Polyamiden und Polyestern mit hinreichend niedrigem Erweichungspunkt (passend zur Verarbeitungstemperatur von Polypropylen), Polyvinylacetat, Polyvinylbutyral, Vinylacetatvinyalkoholcopolymer und Poly(meth)acrylate. Diese stark polaren Materialien gelten dem Fachmann als nicht mit Polypropylen verträglich. Überraschenderweise erweist sich dies bei der erfindungsgemäßen Abmischung aus speziellem Copolymer und flammhemmenden Füllstoff als kein Problem. Bevorzugt werden Polyvinylacetat und weiche Poly(meth)acrylate, die auch vernetzt sein können. Diese können auch eine Core-Shell-Struktur aufweisen, beispielweise ein Kern aus Polyacrylaten von Alkoholen mit 2 bis 8 Kohlenstoffatomen und einer Hülle aus Polymethylmethacryat. Insbesondere stellen sich Acrylat-Impact-Modifier, welche für die Modifizierung von PVC hergestellt werden, als besonders geeignet heraus, da sie schon in kleinen Mengen eine deutliche Verbesserung des Brandverhaltens bewirken, dabei die Flexibilität der Wickelfolie nicht wesentlich beeinträchtigen und trotz ihrer Polarität die Haftung der Schmelze auf Kalander- oder Kühlwalzen nicht erhöhen.
Eine weitere Möglichkeit liegt in der Verwendung von Polyolefinen, bei denen der Sauerstoff durch Pfropfung (zum Beispiel mit Maleinsäureanhydrid oder einem (Meth)Acrylatmonomer) eingebracht wird. In einer bevorzugten Ausführungsform liegt der Anteil an Sauerstoff bezogen auf das Gesamtgewicht an allen Polymeren zwischen 0,5 und 5 phr (entspricht auch Gew.-%), insbesondere 0,8 bis 3 phr. Wird neben dem erfindungsgemäßen Polypropylencopolymer ein thermoplastisches sauerstoff- oder stickstoffhaltiges Polymer eingesetzt, hat dieses vorzugsweise einen spezifizierten Schmelzindex im Bereich von ± 50 % des Schmelzindex des Polypropylencopolymers.
Eine spezielle Ausführungsform ist eine Wickelfolie mit mindestens einer Coextrusionsschicht aus einem stickstoff- oder sauerstoffhaltigem Polymer, welche mit den hier offenbarten Flammschutz- und Alterungsschutzmitteln oder Rußen versehen sein kann, neben einer Schicht aus Polypropylencopolymer.

Als Flammschutzmittel kommen nur halogenfreie Materialien in Frage, das sind beispielsweise Füllstoffe wie Polyphosphate, Carbonate und Hydroxide des Aluminiums beziehungsweise des Magnesiums, Borate, Stannate und organische Flammschutzmittel auf Stickstoffbasis.

Bevorzugt sind
a) Kombinationen aus Phosphaten (zum Beispiel Ammoniumpolyphosphat oder Ethylendiaminpolyphosphat) und Stickstoffverbindungen sowie vor allem
b) Hydroxide des Magnesiums.

Polyphosphate und Stickstoffverbindungen sind geeignet, aber zum Teil wasserempfindlich. Dies kann zu Korrosion oder Verschlechterungen der elektrischen Eigenschaften wie der Durchschlagspannung führen. Wassereinfluß ist für eine Wickelfolie in der Fahrgastzelle nicht von Bedeutung. Im Motorraumbereich kann die Wickelfolie jedoch warm und naß werden. Beispiele für stickstoffhaltige Flammschutzmittel sind Dicyandiamid, Melamincyanurat und sterisch gehinderte Amine wie zum Beispiel die Klasse der HA(L)S. Roter Phosphor kann mitverwendet werden, vorzugsweise wird darauf verzichtet (das heißt, die Menge ist Null oder nicht flammwirksam), da die Verarbeitung gefährlich ist (Selbstentzündung von frei werdendem Phosphin beim Einmischen in das Polymer, selbst bei gecoatetem Phosphor kann noch so viel Phosphin entstehen, daß für das Bedienungspersonal eine Gesundheitsgefährdung besteht). Außerdem können bei Verwendung von rotem Phosphor keine farbigen sondern nur schwarze und braune Produkte hergestellt werden.

Bevorzugter Füllstoff als Flammschutzmittel ist Magnesiumhydroxid, insbesondere in Kombination mit stickstoffhaltigen Flammschutzmittein. Beispiele für stickstoffhaltige Flammschutzmittel sind Melamin, Ammelin, Melam, Melamincyanurat. Roter Phosphor wirkt literaturbekannterweise bei Verwendung von Magnesiumhydroxid ebenfalls synergistisch. Auf die Verwendung wird aber aus den zuvor genannten Gründen verzichtet. Organische und anorganische Phosphorverbindungen in Form der bekannten Flammschutzmittel wie zum Beispiel auf Basis des Triarylphosphats oder Polyphosphat-Salze wirken antagonistisch. In den bevorzugten Ausführungsformen wird daher auf gebundenen Phosphor verzichtet, soweit es sich nicht um Phosphite mit Alterungsschutzwirkung handelt. Diese sollten den Gehalt an chemisch gebundenem Phosphor von 0,5 phr nicht übersteigen.

Das Flammschutzmittel kann mit einem Coating versehen sein, wobei dieses auch beim Compoundierprozeß nachträglich aufgebracht werden kann. Geeignete Coatings sind Silane wie Vinlysilan oder freier Fettsäuren (oder deren Derivate) wie Stearinsäure, Silikate, Borate, Aluminiumverbindungen, Phosphate, Titante aber auch Chelatisierungsmittel.
Der Gehalt an freier Fettsäure oder deren Derivat liegt bevorzugt zwischen 0,3 und 1 Gew.-%.

Besonders bevorzugt sind gemahlene Magnesiumhydroxide, Beispiele sind Brucit (Magnesiumhydroxid), Kovdorskite (Magnesiumhydroxydphosphat), Hydromagnesit (Magnesiumhydroxicarbon) und Hydrotalcit (Magnesiumhydroxid mit Aluminium und Carbonat im Kristallgitter), wobei die Verwendung von Brucit besonders bevorzugt ist. Beimengungen von Magnesiumcarbonaten wie zum Beispiel Dolomit [CaCO₃ · MgCO₃, Mᵣ 184.41], Magnesit (MgCO₃), Huntit [CaCO₃ · 3 MgCO₃, Mᵣ 353.05] sind zulässig.

Für die Alterung stellt sich ein Gehalt an Calciumcarbonat (als Verbindung oder in Form eines Mischkristalls aus Calcium und Magnesium und Carbonat) sogar als vorteilhaft heraus, wobei ein Anteil von 1 bis 4 Gew.-% Calciumcarbonat als günstig angesehen wird (der analytische Calciumgehalt wird auf reines Calciumcarbonat umgerechnet). Der Gehalt an Calcium und Carbonat ist bei Brucit in vielen Lagerstätten als Verunreinigung in Form Kreide, Dolomit, Huntit oder Hydrotalcit vorhanden, kann aber auch dem Magnesiumhydroxid gezielt zugemischt werden. Die positive Wirkung beruht möglicherweise auf der Neutralisation von Säuren. Diese entstehen zum Beispiel aus Magnesiumchlorid, welches in der Regel als Katalysatorrückstand in Polyolefinen (zum Beispiel aus Spheripolprozeß) anzutreffen ist. Saure Bestandteile aus der Klebstoffbeschichtung können ebenfalls in die Folie einwandern und damit die Alterung verschlechtern. Durch Zumischung von Calciumstearat kann eine ähnliche Wirkung wie durch Calciumcarbonat erzielt werden, der Zusatz von größeren Mengen verringert aber bei solchen Wickelbändern die Klebkraft der Klebstoffbeschichtung und insbesondere die Haftung einer solchen Klebstoffschicht auf der Wickelfolienrückseite.

Besonders geeignet ist Magnesiumhydroxid mit einer durchschnittlichen Teilchengröße von mehr als 2 µm wobei der Medianwert gemeint ist (d₅₀ ermittelt durch Laserlichtstreuung nach Cilas) und insbesondere größer oder gleich 4 µm. Die spezifische Oberfläche (BET) liegt vorzugsweise unter 4 m²/g (DIN 66131/66132). Übliche naß gefällte Magnesiumhydroxide sind feinteilig, in der Regel liegt die durchschnittliche Teilchengröße bei 1 µm und darunter, die spezifische Oberfläche liegt bei 5 m²/g und mehr. Die obere Grenze der Teilchengrößeverteilung d₉₇ liegt vorzugsweise nicht über 20 µm, um das Auftreten von Löchern in der Folie und Versprödung zu vermeiden. Daher ist das Magnesiumhydroxid vorzugsweise gesiebt. Ein Gehalt an Teilchen mit einem Durchmesser von 10 bis 20 µm gibt der Folie einen angenehm aussehenden Matteffekt.

Die bevorzugte Teilchenform ist unregelmäßig kugelig ähnlich der von Flußkieseln. Sie wird vorzugsweise durch Mahlung erhalten. Besonders bevorzugt ist Magnesiumhydroxid, welches durch Trockenmahlung in Gegenwart einer freier Fettsäure insbesondere von Stearinsäure hergestellt wurde. Das sich bildende Fettsäurecoating verbessert die mechanischen Eigenschaften von Mischungen aus Magnesiumhydroxid und Polyolefinen und verringert das Ausblühen von Magnesiumcarbonat. Die Verwendung eines Fettsäuresalzes (zum Beispiel Natriumstearat) ist ebenfalls möglich, hat aber den Nachteil daß die daraus hergestellte Wickelfolie bei Feuchtigkeit eine erhöhte Leitfähigkeit aufweist, was bei Anwendungen, bei den die Wickelfolie auch die Funktion eines Isolierbandes übernimmt, nachteilig ist. Bei synthetisch gefälltem Magnesiumhydroxid wird die Fettsäure wegen der Wasserlöslichkeit immer in Salzform zugegeben. Dies ist ein weiterer Grund, warum für die erfindungsgemäße Wickelfolie ein gemahlenes Magnesiumhydroxid gegenüber einem gefällten bevorzugt wird.

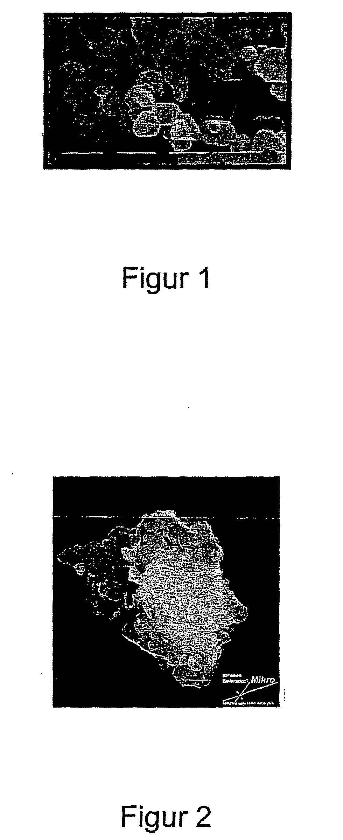

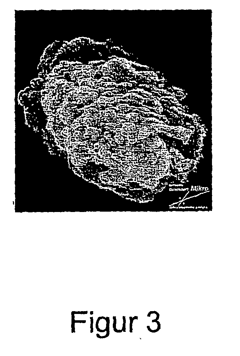

In den Figuren 1 bis 3 sind verschiedene Teilchenformen abgebildet. Figur 1 zeigt regelmäßig geformte, plättchenförmige Teichen, Figur 2 zeigt unregelmäßig geformte, plättchenförmige Teichen, Figur 3 zeigt unregelmäßig geformte, kugelförmige Teichen.

Weniger geeignet ist Magnesiumhydroxid in Plättchenform. Dies gilt für regelmäßige (zum Beispiel Hexaeder) und unregelmäßige Plättchen.

Dem Fachmann liegt die Verwendung des feinteiligen synthetischen Magnesiumhydroxids nahe, da es sehr rein ist und die Flammfestigkeit besser als bei großen Teilchen ist. Überraschenderweise stellte sich heraus, daß sich Compounds aus gemahlenem Magnesiumhydroxid mit größeren kugeligen Teilchen beim Kalandrier- und Extrusionsprozeß besser verarbeiten lassen als Compounds aus gemahlenem Magnesiumhydroxid mit kleinen plättchenförmigen Teilchen. Feinteiliges plättchenförmiges Magnesiumhydroxid ergibt wesentlich höhere Schmelzviskositäten als größeres kugeliges Magnesiumhydroxid. Dem Problem kann mit Polymeren mit hohem Schmelzindex (MFI) begegnet werden, wodurch sich aber die mechanische Stabilität der Schmelze verschlechtert, was insbesondere für Blasextrusion und Kalandrierung wichtig ist. In der bevorzugten Ausführungsform läßt sich die Folie am Kalander leichter von den Walzen abziehen beziehungsweise der Schlauch bei Blasextrusion steht besser (keine Abrisse des Schmelzschlauches), wobei die Flammwidrigkeit aber etwas schlechter ist als bei synthetischem Magnesiumhydroxid wie es der Fachmann bevorzugt. Dem kann man durch Erhöhung des Füllstoffgehaltes begegnen, was aber ein besonders weiches Polymer voraussetzt. Dies kann ein weiches Ethylenhomopolymer oder Ethylencopolymer sein, wobei die daraus gefertigte Folie zur Erhöhung der Wärmebeständigkeit vorzugsweise vernetzt wird. Die spezielle Problemlösung dieser Erfindung ist ein besonders weiches Polypropylencopolymer wie oben ausgeführt. Dieses spezielle Polymer ermöglicht in besonderem Maße den Gebrauch hoher Füllstoffmengen und noch höherer im Fall von gemahlenem Magnesiumhydroxid mit einem höheren d₅₀₋Wert ohne daß das Wickelfolie für die Anwendung zu steif und unflexibel wird und bedarf keiner Vernetzung. Für Anwendungen unter dem Einfluß hoher Gebrauchstemperatur können die Schwermetallspuren von synthetischem Magnesiumhydroxid die Alterung ungünstig beeinflussen, was durch die Anwendung der unten genannten speziellen Alterungsschutzkombinationen verhindert wird.

Die Menge des/der Flammschutzmittel wird so hoch gewählt, daß die Wickelfolie flammwidrig, das heißt, langsam brennend ist. Die Brandgeschwindigkeit nach MVSS 302 bei waagerechter Probe liegt vorzugsweise unter 200 mm/min, besonders bevorzugt unter 100 mm/min, in einer herausragenden Ausführungsform der Wickelfolie ist diese unter diesen Prüfbedingungen selbstverlöschend. Der Oxygen-Index (LOI) liegt bevorzugt über 20, insbesondere über 23 und besonders bevorzugt über 27 %. Bei Verwendung von Magnesiumhydroxid (natürlich und synthetisch) liegt der Anteil vorzugsweise bei 70 bis 200 phr und insbesondere bei 110 bis 180 phr.

Bei Verwendung von 90 und mehr phr an Füllstoff werden folgende Verfahren bevorzugt und beansprucht:
- Mischung von Polymer und Füllstoff in einem Stempelkneter im Batchbetrieb oder kontinuierlich (zum Beispiel von Fa. Banbury), bevorzugt wird ein Teil des Füllstoffs zugegeben, wenn ein anderer Teil schon mit dem Polymer homogenisiert wurde.
- Mischung von Polymer und Füllstoff in einem Zweischneckenextruder, wobei mit einem Teil des Füllstoffs ein Vorcompound hergestellt wird, der in einem zweiten Compoundiergang mit dem Rest des Füllstoffs vermischt wird.
- Mischung von Polymer und Füllstoff in einem Zweischneckenextruder, wobei der Füllstoff nicht an einer Stelle in den Extruder gegeben wird, sondern in mindestens zwei Zonen zum Beispiel durch Benutzung eines Sidefeeders.

Weitere bei Folien übliche Additive wie Füllstoffe, Pigmente, Alterungsschutzmittel, Nucleierungsmittel, Impactmodifier oder Gleitmittel und andere können zur Herstellung der verwendet werden. Diese Additive werden zum Beispiel im "Kunststoff Taschenbuch" Hanser Verlag, Hrsg. H. Saechtling, 28. Ausgabe oder "Plastic Additives Handbook", Hanser-Verlag, Hrsg. H. Zweifel, 5. Auflage beschrieben. In den folgenden Ausführungen wird zur Vermeidung von schwer verständlichen chemischen Namen die jeweilige CAS-Reg.Nr. verwendet.

Die vorliegende Erfindung hat hauptsächlich die Abwesenheit von Halogenen und flüchtigen Weichmachern zum Ziel. Wie ausgeführt steigen die thermischen Anforderungen, so daß zusätzlich eine erhöhte Beständigkeit gegenüber konventionellen PVC-Wickelfolien oder den in Erprobung befindlichen PVC-freien Folienwickelbändern erreicht werden soll. Daher wird die vorliegende Erfindung diesbezüglich im folgenden ausführlich beschrieben.

Die erfindungsgemäße Wickelfolie weist eine Wärmestabilität von mindestens 105 °C nach 3000 Stunden auf, d.h., daß nach dieser Lagerung noch eine Bruchdehnung von mindestens 100 % vorhanden ist. Sie sollte des weiteren eine Bruchdehnung von mindestens 100 % nach 20 Tagen Lagerung bei 136 °C (Schnelltest) beziehungsweise eine Hitzebeständigkeit von 170 °C (30 min.) aufweist. In einer hervorragenden Ausgestaltung mit den beschriebenen Antioxidantien und optional auch mit einem Metalldesaktivator werden 125 °C nach 2000 Stunden oder sogar 125 °C nach 3000 Stunden erreicht. Klassische PVC-Wickelfolien auf DOP-Basis weisen eine Wärmestabilität von 85 °C (Passagierraum) auf, Hochleistungsprodukte auf der Basis von Polymerweichmacher erreichen 105 °C (Motorraum).

Daruber hinaus muß die Wickelfolie mit einer Kabelummantelung auf Polyolefinbasis vertraglich sein, das heißt nach Lagerung des Verbundes Kabel/Wickelfolie darf weder eine Versprodung der Wickelfolie noch der Kabelisolierung auftreten. Durch die Auswahl eines oder mehrerer passender Antioxidantien können eine Verträglichkeit bei 105°C vorzugsweise bei 125 °C (2000 Stunden, insbesondere 3000 Stunden) und eine Kurzzeitwärmebeständigkeit von 140 °C (168 Stunden) erreicht werden.
Eine weitere Voraussetzung für eine ausreichende Kurzzeitwärmebeständigkeit und Hitzebeständigkeit ist ein hinreichender Schmelzpunkt des Polypropylenpolymers (mindestens 120°C) sowie eine hinreichende mechanische Stabilität der Schmelze etwas oberhalb des Kristallitschmelzpunktes. Letztere wird durch einen Schmelzindex von höchstens 20 g/10 min bei einem Füllstoffgehalt von mindestens 80 phr oder von höchstens 5 g/10 min bei einem Füllstoffgehalt von mindestens 40 phr gewährleistet. Entscheidend ist jedoch die Alterungsstabilisierung zur Erreichung der oxidativen Beständigkeit ab 140 °C, was insbesondere durch sekundäre Antioxidantien wie Phosphite erreicht wird.

Eine Verträglichkeit zwischen Wickelfolie und den übrigen Kabelbaumkomponenten wie Steckern und Rillrohren ist ebenfalls wünschenswert und ebenfalls durch Anpassung der Rezepturen, insbesondere bezüglich der Additive, zu erreichen. Als Negativbeispiel sei die Kombination einer ungeeigneten Polypropylenwickelfolie mit einem kupferstabilisiertem Polyamidrillrohr aufgeführt, in diesem Fall sind sowohl das Rillrohr als auch die Wickelfolie nach 3000 Stunden 105 °C versprödet.

Zur Erreichung einer guten Alterungsstabilität und Verträglichkeit fällt der Verwendung der richtigen Alterungsschutzmittel eine besondere Rolle zu. Dabei ist auch die Gesamtmenge an Stabilisator zu berücksichtigen, da bei bisherigen Versuchen zur Herstellung solcher Wickelbänder keine oder nur unter 0,3 phr (x phr bedeutet x Teile auf 100 Teile Polymer oder Polymerblend) Alterungsschutzmittel verwendet wurden, wie es auch bei Herstellung sonstiger Folien üblich ist. Die erfindungsgemäßen Wickelbänder enthalten in der bevorzugten Ausführungsform mehr als 0,3 und insbesondere mehr als 1 phr Antioxidant (worin ein optionaler Metalldesaktivator nicht eingerechnet ist). In einer bevorzugten Ausführungsform liegt der Anteil an sekundärem Antioxidant bei mehr als 0,3 phr. Stabilisatoren für PVC-Produkte lassen sich nicht auf Polypropylen übertragen. Sekundäre Antioxidantien bauen Peroxide ab und werden daher bei Dienelastomeren als Teil von Alterungsschutzpaketen verwendet. Überraschend wurde gefunden, daß eine Kombination von primären Antioxidantien (zum Beispiel sterisch gehinderten Phenolen oder C-Radikalfängern wie CAS 181314-48-7) und sekundären Antioxidantien (zum Beispiel Schwefelverbindungen, Phosphiten oder sterisch gehinderten Aminen), wobei die beiden Funktionen auch in einem Molekül vereinigt sein können, die Aufgabe auch bei dienfreien Polyolefinen wie Polypropylen löst. Vor allem wird die Kombination von primärem Antioxidant, vorzugsweise sterisch gehinderten Phenolen mit einem Molekulargewicht von mehr als 500 g/mol (vor allem > 700 g/mol), mit einem phosphitischen sekundären Antioxidant (vor allem mit einem Molekulargewicht > 600 g/mol) bevorzugt. Phosphite oder eine Kombination aus primären und mehreren sekundären Alterungsschutzmitteln werden bei Wickelfolien aus Polypropylencopolymeren bisher nicht eingesetzt. Insbesondere ist die Kombination aus einem wenig flüchtigen primären phenolischen Antioxidants und jeweils einem sekundären Antioxidants aus der Klasse der Schwefelverbindungen (bevorzugt mit einem Molekulargewicht von mehr als 400 g/mol, insbesondere > 500 g/mol) und aus der Klasse der Phosphite geeignet, wobei die phenolische, die schwefelhaltigen und die phosphitische Funktionen nicht in drei verschiedenen Molekülen vorliegen müssen sondern auch mehr als eine Funktion in einem Molekül vereinigt sein kann.

### Beispiele:

- Phenolische Funktion:
   CAS 6683-19-8 , 2082-79-3, 1709-70-2, 36443-68-2, 1709-70-2, 34137-09-2, 27676-62-6, 40601-76-1, 31851-03-3, 991-84-4
- Schwefelhaltige Funktion:
   CAS 693-36-7, 123-28-4, 16545-54-3, 2500-88-1
- Phosphitische Funktion:
CAS 31570-04-4, 26741-53-7, 80693-00-1, 140221-14-3, 119345-01-6, 3806-34-6, 80410-33-9, 14650-60-8, 161717-32-4
- Phenolische und schwefelhaltige Funktion:
   CAS 41484-35-9, 90-66-4, 110553-27-0, 96-96-5, 41484
- Phenolische und aminische Funktion:
   CAS 991-84-4, 633843-89-0
- Aminische Funktion:
CAS 52829-07-9, 411556-26-7, 129757-67-1, 71878-19-8, 65447-77-0

Die Kombination von CAS 6683-19-8 (zum Beispiel Irganox 1010) mit Thiopropionsäureester CAS 693-36-7 (Irganox PS 802) oder 123-28-4 (Irganox PS 800) mit CAS 31570-04-4 (Irgafos 168) ist besonders bevorzugt. Bevorzugt ist eine Kombination, bei welcher der Anteil an sekundärem Antioxidant den des primären übersteigt. Zusätzlich können noch Metalldesaktivatoren zur Komplexierung von Schwermetallspuren, welche die Alterung katalytisch beschleunigen können, zugefügt werden. Beispiele sind CAS 32687-78-8, 70331-94-1, 6629-10-3, Ethylendiamintetraessigsäure, N,N'-di-salicyliden-1,2-diaminopropan oder Handelprodukte wie 3-(N-salicylol)-amino-1,2,4-triazol (Palmarole ADK STAB CDA-1), N,N'-bis[3-(3',5'-di-tert-butyl-4'-hydroxyphenyl)propionyl]hydrazid (Palmarole MDA.P.10) oder 2,2'-oxamido-bis-[ethyl-3-(tert-butyl-4-hydroxyphenyl)propionat] (Palmarole MDA.P.11.).

Die Auswahl der genannten Alterungsschutzmittel hat besondere Bedeutung für die erfindungsgemäße Wickelfolie, da mit phenolischen Antioxidantien allein oder selbst in Kombination mit schwefelhaltigen Costabilisatoren in der Regel keine praxisgerechten Produkte erreicht werden können. Bei der Kalanderverarbeitung, bei der auf den Walzen ein relativ lang andauernder Zutritt von Luftsauerstoff unvermeidlich ist, stellt sich die Mitverwendung von Phosphitstabilisatoren als praktisch unumgänglich für eine ausreichende Wärmealterungsstabilität des Produktes heraus. Selbst bei Extrusionsverarbeitung macht sich der Zusatz von Phosphiten bei der Alterungsprüfung des Produktes noch positiv bemerkbar. Für den Phosphitstabilisator wird eine Menge von mindestens 0,1, vorzugsweise mindestens 0,3 phr bevorzugt. Insbesondere bei der Verwendung von natürlichen Magnesiumhydroxiden wie Brucit können sich durch wanderungsfähige Metallverunreinigungen wie Eisen, Mangan, Chrom oder Kupfer Alterungsprobleme ergeben, die nur durch oben genannte Erkenntnisse der richtigen Kombination und Menge an Alterungsschutzmitteln vermieden werden. Gemahlenes Brucit weist, wie oben ausgeführt, eine Reihe von technischen Vorteilen gegenüber gefälltem Magnesiumhydroxid auf, so daß die Kombination mit Antioxidantien wie beschrieben besonders sinnvoll ist. Für Anwendungen mit hoher Temperaturbelastung (zum Beispiel als Kabeiwickelfolie im Motorraum von Kraftfahrzeugen oder als Isolierwicklung von Magnetspulen in Fernseh- oder PC-Bildschirmen) wird eine Ausführungsform bevorzugt, die neben den Antioxidantien zusätzlich einen Metalldesaktivator beinhaltet.

Die erfindungsgemäße Wickelfolie ist vorzugsweise pigmentiert, insbesondere schwarz. Die Einfärbung kann in der Basisfolie, in der Klebstoff- oder einer sonstigen Schicht vorgenommen werden. Die Verwendung von organischen Pigmenten oder Farbstoffen in der Wickelfolie ist möglich, bevorzugt ist die Verwendung von Ruß. Der Anteil Ruß liegt vorzugsweise bei mindestens 5 phr, insbesondere bei mindestens 10 phr, da er überraschenderweise einen wesentlichen Einfluß auf das Brandverhalten zeigt. Die Thermoalterungsstabilität liegt überraschenderweise höher, wenn die Zugabe des Rußes (zum Beispiel in Form eines Masterbatches) erst nach dem Mischen des Polyproplyenpolymers mit den Alterungsschutzmitteln (Antioxidantien) erfolgt. Dieser Vorteil kann genutzt werden, indem zuerst Polymer, Alterungsschutzmittel und Füllstoff miteinander compoundiert werden und der Russ erst einem Extruder der Anlage zur Folienherstellung (Kalander oder Extruder) als Masterbatch zugegeben wird. Als Zusatznutzen ergibt sich, daß bei Produktwechsel am Compounder (Stempelkneter oder Extruder wie Zweischneckenextruder oder Planetwalzenextruder) keine aufwendige Reinigung von Rußrückständen erforderlich ist. Für den Fachmann überraschend lassen sich an der Folienanlage auch ungewöhnlich hohe Mengen Rußmasterbatch problemlos zugeben, das heißt nicht nur 1 bis 2, sondern sogar 15 bis 30 phr. Als Ruß können alle Typen wie zum Beispiel Gasruß, Acetylenruß, Fumaceruß und Flammruß verwendet werden, wobei Flammruß bevorzugt wird, auch wenn zur Einfärbung von Folien Furnaceruße üblich sind. Für eine optimalen Alterung werden Rußtypen mit einem pH-Wert im Bereich von 6 bis 8 bevorzugt.

Die Herstellung der Wickelfolie erfolgt auf einem Kalander oder durch Extrusion wie zum Beispiel im Blas- oder Castprozeß. Diese Verfahren sind zum Beispiel in Ullmann's Encyclopedia of Industrial Chemistry, 6. Aufl., Wiley-VCH 2002 beschrieben. Der Compound aus den Hauptkomponenten oder allen Komponenten kann in einem Compounder wie Kneter (zum Beispiel Stempelkneter) oder Extruder (zum Beispiel Zweischneckenextruder, Planetwalzenextruder) hergestellt und dann in eine feste Form (zum Beispiel Granulat) überführt werden, welche dann in einer Folienextrusionsanlage oder in einem Extruder, Kneter oder Walzwerk einer Kalanderanlage aufgeschmolzen und weiterverarbeitet werden. Hohe Mengen an Füllstoff ergeben leichte Inhomogenitäten (Fehlstellen), welche die Durchschlagspannung stark reduzieren. Der Mischvorgang muß daher so gründlich vorgenommen werden, daß die aus dem Compound gefertigten Folie eine Durchschlagspannung von mindestens 3 kV/100 µm vorzugsweise mindestens 5 kV/100 µm erreicht. Bevorzugt ist die Herstellung von Compound und Folie in einem Arbeitsgang. Die Schmelze wird aus dem Compounder direkt einer Extrusionsanlage oder einem Kalander zugeführt, wobei die Schmelze gegebenenfalls Hilfseinrichtungen wie Filter, Metalldetektoren oder Walzwerke passieren kann. Die Folie wird beim Herstellprozeß so gering wie möglich orientiert, um gute Handeinreißbarkeit, niedrigen Kraftwert bei 1 % Dehnung und niedrigen Schrumpf zu erzielen. Aus diesem Grund wird der Kalanderprozeß besonders bevorzugt.

Der Schrumpf der Wickelfolie in Längsrichtung beträgt nach Wärmelagerung (30 Minuten in einem Ofen bei 125 °C auf einer Talkumschicht liegend) weniger als 5 %, vorzugsweise weniger als 3 %.

Die mechanischen Eigenschaften der erfindungsgemäßen Wickelfolie liegen bevorzugt in den folgenden Bereichen:
- Reißdehnung in md (Maschinenrichtung) von 300 bis 1000, besonders bevorzugt von 500 bis 800 %,
- Reißkraft in md im Bereich von 4 bis 15, besonders bevorzugt von 5 bis 8 N/cm,
wobei die Folie zur Ermittlung der Daten mit scharfen Klingen zugeschnitten wurden.

Die Wickelfolie wird in der bevorzugten Ausführungsform ein- oder beidseitig, bevorzugt einseitig, mit einer Siegel- oder Haftklebebeschichtung versehen, um eine notwendige Fixierung des Wickelendes durch ein Klebeband, Draht oder Verknotung zu vermeiden. Die Menge der Klebstoffschicht beträgt jeweils 10 bis 40 g/m² vorzugsweise 18 bis 28 g/m² (das ist die Menge nach einer eventuellen notwendigen Entfernung von Wasser oder Lösungsmittel; die Zahlenwerte entsprechen auch in etwa der Dicke in µm). In einem Fall mit Klebstoffbeschichtung beziehen sich die hier gemachten Angaben zur Dicke und zu dickenabhängigen mechanischen Eigenschaften ausschließlich auf die polypropylenhaltige Schicht der Wickelfolie ohne Berücksichtung von Klebstoffschicht oder weiteren Schichten, die in Zusammenhang mit Klebstoffschichten vorteilhaft sind. Die Beschichtung muß nicht vollflächig sein, sondern kann auch teilflächig ausgeführt sein. Als Beispiel sei eine Wickelfolie mit je einem haftklebenden Streifen an den Seitenkanten genannt. Diese kann zu etwa rechteckigen Blättern abgeschnitten werden, welche mit dem einem Klebstoffstreifen auf dem Kabelbündel aufgeklebt und dann so weit gewickelt werden, bis der andere Klebstoffstreifen auf der Wickelfoliendrückseite verklebt werden kann. Eine solche schlauchartige Umhüllung, ähnlich einer Sleeve-Verpackung, weist den Vorteil auf, daß die Biegsamkeit des Kabelbaumes durch die Umwicklung praktisch nicht verschlechtert wird.

Als Klebstoff kommen alle gängigen Typen in Frage, vor allem auf Basis von Kautschuk. Solche Kautschuke können zum Beispiel Homo- oder Copolymere des Isobutylens, des 1-Butens, des Vinylacetats, des Ethylens, von Acrylsäureestern, des Butadiens oder des Isoprens sein. Besonders geeignet sind Rezepturen auf Basis von Polymeren basierend auf Acrylsäureestern, Vinylacetat oder Isopren.

Zur Optimierung der Eigenschaften kann die zum Einsatz kommende Selbstklebemasse mit einem oder mehreren Additiven wie Klebrigmachern (Harzen), Weichmachern, Füllstoffen, Flammschutzmitteln, Pigmenten, UV-Absorbern, Lichtschutz-, Alterungsschutzmitteln, Photoinitiatoren, Vernetzungsmitteln oder Vernetzungspromotoren abgemischt sein. Klebrigmacher sind beispielsweise Kohlenwasserstoffharze (zum Beispiel Polymere auf Basis ungesättigter C5- oder C9-Monomere), Terpenphenolharze, Polyterpenharze aus Rohstoffen wie zum Beispiel α- oder β-Pinen, aromatische Harze wie Cumaron-Inden-Harze oder Harze auf Basis Styrol oder α-Methylstyrol, wie Kolophonium und seine Folgeprodukte, zum Beispiel disproportionierte, dimerisierte oder veresterte Harze, zum Beispiel wozu Umsetzungsprodukte mit Glycol, Glycerin oder Pentaerythrit, um nur einige zu nennen, sowie weitere Harze (wie beispielsweise aufgeführt in Ullmanns Enzyklopädie der technischen Chemie, Band 12, Seiten 525 bis 555 (4. Aufl.), Weinheim). Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte hydrierte Polycyclopentadienharze, hydrierte Kolophoniumderivate oder hydrierte Terpenharze.

Geeignete Füllstoffe und Pigmente sind beispielsweise Ruß, Titandioxid, Calciumcarbonat, Zinkcarbonat, Zinkoxid, Silicate oder Kieselsäure. Geeignete beimischbare Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel niedermolekulare Nitril- oder Polyisoprenkautschuke), flüssige Polymerisate aus Buten und/oder lsobuten, Acrylsäureester, Polyvinylether, Flüssig- und Weichharze auf Basis der Rohstoffe von Klebharzen, Wollwachs und andere Wachse oder flüssige Silikone. Vernetzungsmittel sind beispielsweise Isocyanate, Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure. Alterungsschutzmittel sind beispielsweise sterisch gehinderte Phenole, die zum Beispiel unter dem Handelsnamen. Irganox^{™} bekannt sind.

Eine Vernetzung ist vorteilhaft, da die Scherfestigkeit (zum Beispiel ausgedrückt als Holding Power) erhöht wird und sich damit die Neigung zu Deformationen der Rollen bei Lagerung (Teleskopieren oder Bildung von Hohlstellen, auch Gaps genannt) verringert. Auch das Ausquetschen der Haftklebermasse wird verringert. Dies drückt sich in klebfreien Seitenkanten der Rollen und klebfreien Kanten bei der spiralig um Kabel geführten Wickelfolie aus. Die Holding Power liegt vorzugsweise oberhalb von 150 min.

Die Klebkraft auf Stahl sollte im Bereich von 1,5 bis 3 N/cm liegen.

Zusammenfassend weist die bevorzugte Ausführungsform einseitig eine lösungsmittelfreie Selbstklebemasse auf, welche durch Coextrusion, Schmelz- oder Dispersionsbeschichtung zustande gekommen ist. Dispersionsklebstoffe sind bevorzugt insbesondere solche auf Polyacrylat-Basis.

Vorteilhaft ist die Verwendung einer Primerschicht zwischen Wickelfolie und Klebmasse zur Verbesserung der Haftung der Klebmasse auf der Wickelfolie und somit der Vermeidung von Übertragung von Klebstoff auf die Folienrückseite während des Abwickelns der Rollen.

Als Primer sind die bekannten Dispersion- und Lösungsmittelsysteme verwendbar zum Beispiel auf Basis von Isopren- oder Butadienhaltigen Kautschuk und/oder Cyclokautschuk. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern. Besonders bevorzugt ist die Anwendung solcher Verfahren auf lösungsmittelfreie Klebstoffschichten, insbesondere solche auf Acrylatbasis.

Eine Beschichtung der Rückseite kann durch bekannte Releasemittel (gegebenenfalls mit anderen Polymeren abgemischt) erfolgen. Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat, Polysiloxane (zum Beispiel als Copolymer mit Polyurethanen oder als Propfcopolymer auf Polyolefin), thermoplastische Fluorpolymere. Der Begriff Stearyl steht als Synonym für alle geraden oder verzweigten Alkyle oder Alkenyle mit einer C-Zahl von mindestens 10, wie zum Beispiel Octadecyl.

Beschreibungen der üblichen Klebmassen sowie Rückseitenbeschichtungen und Primern finden sich zum Beispiel in "Handbook of Pressure Sensitive Adhesive Technology", D. Satas, (3. Auflage). Die genannten Rückseiten-Primer- und Klebebeschichtungen sind in einer Ausführungsform durch Coextrusion möglich.

Die Ausführung der Folienrückseite kann aber auch zur Erhöhung der Haftung der Klebmasse auf der Wickelfolienrückseite (zum Beispiel zur Steuerung der Abrollkraft) dienen. Bei polaren Klebstoffen wie zum Beispiel auf Basis von Acrylatpolymeren ist die Rückseitenhaftung auf einer Folie auf Basis von Polypropylenpolymeren oft nicht ausreichend. Zur Erhöhung der Abrollkraft wird eine Ausführungsform beansprucht, bei der polare Rückseitenoberflächen durch Coronabehandlung, Flammvorbehandlung oder Beschichtung/Coextrusion mit polaren Rohstoffen erzielt werden. Alternativ wird eine Wickelfolie beansprucht, bei welchem die Stangenware vor dem Schneiden getempert (in der Wärme gelagert) wurde. Beide Verfahren können auch in Kombination angewandt werden. Die erfindungsgemäße Wickelfolie weist bevorzugt eine Abrollkraft von 1,2 bis 6,0 N/cm, ganz besonders bevorzugt von 1,6 bis 4,0 N/cm und insbesondere 1,8 bis 2,5 N/cm bei 300 mm/min Abrollgeschwindigkeit auf. Das Tempern ist bei PVC-Wickelbändern bekannt, jedoch aus einem anderen Grund. Weich-PVC-Folien besitzen im Gegensatz zu teilkristallinen Polypropylencopolymerfolien einen breiten Erweichungsbereich und, da die Klebmasse durch den ausgewanderten Weichmacher wenig scherfest ist, neigen PVC-Wickelbänder zum Teleskopieren. Diese unvorteilhafte Rollendeformation, bei welcher der Kern aus den Rollen seitlich herausgedrückt wird, kann verhindert werden, wenn das Material vor dem Schneiden längere Zeit gelagert wird oder kurze Zeit einer Temperung (befristete Lagerung in der Wärme) unterworfen wird. Bei dem erfindungsgemäßen Verfahren handelt es sich jedoch um einer Temperung zur Erhöhung der Abrollkraft von Material mit unpolarer Polypropylenrückseite und polarem Klebmasse, wie Polyacrylat oder EVA, da diese Klebmasse auf Polypropylen im Vergleich zu PVC eine extrem geringe Rückseitenhaftung aufweisen. Eine Erhöhung der Abrollkraft durch Temperung oder physikalische Oberflächenbehandlung ist bei Weich-PVC-Wickelbändem nicht notwendig, da die üblicherweise eingesetzten Klebmasse eine hinreichend hohe Haftung auf der polaren PVC-Oberfläche besitzen. Bei Polyolefinwickelfolien ist die Bedeutung der Rückseitenhaftung besonders ausgeprägt, da aufgrund der höheren Kraft bei 1 % Dehnung (bedingt durch das Flammschutzmittel und das Fehlen konventioneller Weichmacher) im Vergleich zu PVC-Folie eine deutlich höhere Rückseitenhaftung beziehungsweise Abrollkraft notwendig ist, um eine hinreichende Dehnung beim Abrollen für die Applikation bereitzustellen. Die bevorzugte Ausführungsform der Wickelfolie wird daher durch Temperung oder physikalische Oberflächenbehandlung hergestellt, um eine herausragende Abrollkraft und Dehnung während der Abrollung zu erreichen, wobei die Abrollkraft bei 300 mm/min vorzugsweise um mindesten 50 % höher liegt als ohne eine solche Maßnahme.

Die Wickelfolie wird für den Fall einer Klebstoffbeschichtung vorzugsweise vorher mindestens 3 Tage, besonders bevorzugt mindestens 7 Tage vor der Beschichtung gelagert, um eine Nachkristallisation zu erreichen, damit die Rollen keine Neigung zum Teleskopieren erhalten (wahrscheinlich weil die Folie beim Kristallisieren schrumpft). Vorzugsweise wird die Folie an der Beschichtungsanlage über geheizte Walzen zur Egalisierung (Verbesserung der Planlage) geführt, was für PVC-Wickelfolien nicht üblich ist.

Folien aus Polyethylen und Polypropylen lassen sich üblicherweise nicht von Hand ein- oder Abreißen. Sie lassen sich als teilkristalline Werkstoffe leicht verstrecken und weisen daher eine hohe Bruchdehnung auf, in der Regel liegt diese erheblich über 500 %. Beim Versuch, solche Folien zu reißen, tritt anstelle eines Risses eine Dehnung ein. Selbst hohe Kräfte können nicht unbedingt die typisch hohen Bruchkräfte überwinden. Selbst wenn dies gelingt, wird kein gut aussehender und verklebbarer Abriß erzeugt, da an beiden Enden ein dünnes schmales Schwänzchen entsteht. Dieses Problem läßt sich auch durch Additive nicht beheben, auch wenn Füllstoffe in hohen Mengen die Bruchdehnung reduzieren. Verstreckt man Polyolefinfolien biaxial, wird die Bruchdehnung um mehr als 50 % reduziert, was die Reißbarkeit begünstigt. Der Versuch, dieses Verfahren auf weiche Wickelfolien zu übertragen, scheiterte jedoch, da der 1 %-Kraftwert erheblich zunimmt und die Kraft-Dehnungs-Kurve erheblich steiler wird. Dies hat zur Folge, daß sich die Flexibilität und Anschmiegsamkeit der Wickelfolie drastisch verschlechtert. Außerdem stellt sich heraus, daß so hoch füllstoffhaltige Folien wegen einer hohen Zahl von Abrissen produktionstechnisch kaum verstreckbar sind.

Überraschenderweise wurde eine Lösung durch das Schneidverfahren beim Konfektionieren der Rollen gefunden. Bei Herstellung der Wickelfolienrollen werden rauhe Schnittkanten erzeugt, die bei mikroskopischer Betrachtung Risse in der Folie ausbilden, die dann offenbar ein Weiterreißen begünstigen. Dies ist insbesondere durch die Anwendung eines Quetschschnitts mit stumpfen oder definiert gezackten rotierenden Messern auf Ballenware (Jumbos, Rollen in großer Länge) oder durch einen Abstechschnitt mit feststehenden Klingen oder rotierenden Messern von Stangenware (Rollen in Produktionsbreite und verkaufsüblicher Länge) möglich. Die Bruchdehnung kann durch einen geeigneten Schliff der Klingen und Messer eingestellt werden. Bevorzugt ist die Ausführung der Herstellung von Stangenware mit Abstechschnitt mit stumpfen feststehenden Klingen. Durch starkes Abkühlen der Stangen vor dem Schneiden kann die Rißbildung beim Schneidprozeß noch verbessert werden. In der bevorzugten Ausführungsform ist die Bruchdehnung der speziell geschnittenen Wickelfolie um mindestens 30 % niedriger als beim Schnitt mit scharfen Klingen. Bei den besonders bevorzugten, mit scharfen Klingen geschnittenen Folien liegt die Bruchdehnung bei 500 bis 800 %, in der Ausführungsform der Folie, deren Seitenkanten beim Schneiden definiert beschädigt werden, zwischen 200 und 500 %.

Die Stangenware kann zur Erhöhung der Abrollkraft vorher einer Wärmelagerung unterzogen werden. Das Schneiden von konventionellen Wickelbändern mit Gewebe-, Vlies- und Folienträger (zum Beispiel PVC) erfolgt durch Scherenschnitt (zwischen zwei rotierenden Messern), Abstechschnitt (feststehende oder rotierender Messer werden in eine rotierende Stange des Produktes gedrückt), Klingenschnitt (die Bahn wird bei Durchlauf durch scharfe Klingen geteilt) oder Quetschschnitt (zwischen einem rotierenden Messer und einer Walze).
Das Schneiden hat zum Ziel, aus Jumbos oder Stangen verkaufsfertige Rollen zu produzieren, aber nicht rauhe Schnittkanten zur leichteren Handeinreißbarkeit zu erzeugen. Bei Wickelfolien aus PVC ist der Abstechschnitt durchaus üblich, da das Verfahren bei weichen Folien wirtschaftlich ist. Die Handeinreißbarkeit ist aber bei PVC schon vom Material her gegeben, da PVC im Gegensatz zu Polypropylen amorph ist und daher beim Reißen nicht verstreckt, sondern nur etwas gedehnt wird. Damit die PVC-Folien nicht zu leicht reißen, muß auf hinreichende Gelierung bei der Folienherstellung geachtet werden was einer optimalen Produktionsgeschwindigkeit entgegensteht, vielfach wird deshalb anstelle von Standard-PVC mit einem K-Wert von 63 bis 65 Material mit einem höheren Molekulargewicht eingesetzt, was K-Werten von 70 und mehr entspricht. Der Abstechschnitt hat also bei den erfindungsgemäßen Wickelfolien aus Polypropylen einen anderen Grund als bei solchen aus PVC.

Die erfindungsgemäße Wickelfolie ist ausgezeichnet zum Umwickeln von langgestrecktem Gut wie Lüftungsrohren, Feldspulen oder Kabelsätzen in Fahrzeugen geeignet.

Die erfindungsgemäße Wickelfolie ist ebenfalls für andere Anwendungen geeignet wie zum Beispiel für Lüftungsrohre im Klimabau, da die hohe Flexibilität eine gute Anschmiegsamkeit an Nieten, Sicken und Falzen sichert. Den heutigen arbeitshygienischen und ökologischen Anforderungen wird Rechnung getragen, indem auf den Einsatz halogenhaltiger Rohstoffen verzichtet wird, dies gilt auch für flüchtige Weichmacher, es sei denn die Mengen sind so gering, daß der Fogging-Wert über 90 % liegt. Die Halogenfreiheit ist für die thermische Verwertung von Abfällen, die solche Wickelbänder enthalten, von außerordentlicher Bedeutung (zum Beispiel Müllverbrennung der Kunststofffraktion vom Fahrzeugrecycling). Das erfindungsgemäße Produkt ist halogenfrei in dem Sinne, daß der Halogenhaft der Rohstoffe so niedrig ist, daß er für die Flammwidrigkeit keine Rolle spielt. Halogene in Spurenmengen, wie sie durch Verunreinigungen oder als Rückstände von Katalysatoren (zum Beispiel aus der Polymerisation von Polymeren) auftreten könnten, bleiben unberücksichtigt. Der Verzicht auf Halogene zieht die Eigenschaft der leichten Brennbarkeit nach sich, was den Sicherheitserfordernissen in elektrischen Anwendungen wie Haushaltsgeräten oder Fahrzeugen nicht entspricht. Das Problem mangelnder Flexibilität bei der Verwendung üblicher PVC-Ersatzmaterialien wie Polypropylen, Polyethylen, Polyestern, Polystyrol, Polyamid oder Polyimid für die Wickelfolie wird in der zugrundeliegenden Erfindung nicht durch flüchtige Weichmacher gelöst sondern durch den Einsatz einer Mischung aus einem PP-Copolymer mit einem Polyolefin mit niedrigem Biegemodul oder Verwendung eines PP-Polymers mit einem niedrigen Biegemodul. Daher ist es besonders überraschend, daß selbst die Verwendung von Füllstoffen mit flammwidriger Wirkung, welche bekanntermaßen die Flexibilität drastisch bis hin zur völligen Versprödung verschlechtern, möglich ist. Die Flexibilität ist von herausragender Bedeutung, da bei Anwendung auf Drähten und Kabeln nicht nur spiralig gewickelt sondern an Verzweigungsstellen, Steckern oder Befestigungsclipsen auch faltenfrei kurvenflexibel gewickelt werden muß. Darüber hinaus ist erwünscht, daß die Wickelfolie den Kabelstrang elastisch zusammenzieht. Dieses Verhalten ist auch zur Abdichtung der Lüftungsrohre notwendig. Diese mechanischen Eigenschaften können nur von einem weichen flexiblen Wickelband erreicht werden. Die Aufgabe bestand darin, die nötige Flexibilität trotz größerer Mengen an Flammschutzmitteln zu erreichen. Die Aufgabe ist bei einem Wickelband aus Polyolefin ungleich schwerer als bei PVC zu lösen, da bei PVC keine oder nur geringe Flammschutzmittel notwendig sind und die Flexibilität leicht durch konventionelle Weichmacher zu erreichen sind.

### Prüfmethoden

Die Messungen werden bei einem Prüfklima von 23 ± 1 °C und 50 ± 5 % rel. Luftfeuchte durchgeführt.

Die Dichte der Polymeren wird nach ISO 1183 und der Biegemodul nach ISO 178 ermittelt und in g/cm³ beziehungsweise MPa ausgedrückt. (Der Biegemodul nach ASTM D790 beruht auf anderen Abmessungen der Probekörper, ist aber im Ergebnis als Zahl vergleichbar.) Der Schmelzindex wird nach ISO 1133 geprüft und in g/10 min ausgedrückt. Die Prüfbedingungen sind wie marktüblich 230 °C und 2,16 kg für Polymere mit kristallinem Polypropylen und 190 °C und 2,16 kg für Polymere mit kristallinem Polyethylen. Der Kristallitschmelzpunkt (Tcr) wird mit DSC nach MTM 15902 (Basell-Methode) beziehungsweise ISO 3146 ermittelt.

Die durchschnittliche Teilchengröße des Füllstoffs wird durch Laserlichtstreuung nach Cilas ermittelt, maßgeblich ist der Medianwert d₅₀.

Die spezifische Oberfläche (BET) des Füllstoffs wird nach DIN 66131/66132 bestimmt.

Das Zugdehnungsverhalten der Wickelfolie wird an Prüflingen vom Typ 2 (rechteckige 150 mm lange und nach Möglichkeit 15 mm breite Prüfstreifen) nach DIN EN ISO 527-3/2/300 mit einer Prüfgeschwindigkeit von 300 mm/min, einer Einspannlänge 100 mm und einer Vorkraft von 0,3 N/cm ermittelt. Im Fall von Mustern mit rauhen Schnittkanten sind die Kanten mit einer scharfen Klinge vor dem Zugversuch zu besäumen. Für die Bestimmung der Kraft oder Spannung bei 1 % Dehnung wird hiervon abweichend mit einer Prüfgeschwindigkeit von 10 mm/min und einer Vorkraftseinstellung von 0,5 N/cm an einer Zugprüfmaschine Modell Z 010 (Hersteller Zwick) gemessen. Die Prüfmaschine ist angegeben, weil der 1 %-Wert etwas von dem Auswertungsprogramm beeinflußt werden kann. Das Zugdehnungsverhalten wird, wenn nicht anders angegeben, in Maschinenrichtung (MD, Laufrichtung) geprüft. Die Kraft wird in N/Streifenbreite und die Spannung in N/Streifenquerschnitt ausgedrückt, die Bruchdehnung in %. Die Prüfergebnisse, insbesondere die Bruchdehnung (Reißdehnung), sind durch eine hinreichende Zahl von Messungen statistisch abzusichern.

Die Klebkräfte werden bei einem Abzugswinkel von 180° nach AFERA 4001 an (nach Möglichkeit) 15 mm breiten Teststreifen bestimmt. Hierbei werden Stahlplatten nach AFERA-Norm als Prüfuntergrund verwendet soweit kein anderer Haftgrund genannt ist.

Die Dicke der Wickelfolie wird nach DIN 53370 bestimmt. Eine eventuelle Haftklebstoffschicht wird von der gemessenen Gesamtdicke abgezogen.

Die Holding Power wird nach der PSTC 107 (10/2001) bestimmt, wobei das Gewicht 20 N beträgt und die Maße der Verklebungsfläche 20 mm in der Höhe und 13 mm in der Breite beträgt.

Die Abrollkraft wird bei 300 mm/min nach DIN EN 1944 gemessen.

Die Handeinreißbarkeit läßt sich nicht in Zahlen ausdrücken, auch wenn Bruchkraft, Bruchdehnung und Schlagzugzähigkeit (alles längs gemessen) von wesentlichem Einfluß sind.

### Bewertung:

- +++ = sehr leicht,
- ++ = gut,
- + = noch verarbeitbar,
- = schwer verarbeitbar,
- -- = nur mit hohem Kraftaufwand abreißbar, die Enden sind unsauber,
- --- = nicht verarbeitbar

Das Brandverhalten wird nach MVSS 302 bei waagerechter Probe gemessen. Im Fall einer einseitigen Haftkleberbeschichtung liegt diese nach oben. Als weitere Methode wird eine Prüfung des Oxygen Index (LOI) vorgenommen. Hierfür wird unter den Bedingungen der JIS K 7201 geprüft.

Die Wärmestabilität wird in Anlehnung an ISO/DIN 6722 bestimmt. Der Ofen wird nach ASTM D 2436-1985 mit 175 Luftwechseln pro Stunde betrieben. Die Prüfzeit beträgt 3000 Stunden. Als Prüftemperaturen werden 85 °C (Klasse A), 105 °C (ähnlich Klasse B aber nicht 100 °C) und 125 °C (Klasse C) gewählt. Die Schnellalterungen erfolgen bei 136 °C, die Prüfung gilt als bestanden, wenn die Reißdehnung nach 20 Tagen Alterung noch mindestens 100 % beträgt.

Bei der Verträglichkeitsprüfung wird die Wärmelagerung auf handelsüblich Leitern (Kabeln) mit Polyolefinisolierung (Polypropylen oder strahlenvernetztes Polyethylen) für Kraftfahrzeuge durchgeführt. Hierfür werden Probekörper aus 5 Leitern von 3 bis 6 mm² Querschnitt und 350 mm Länge mit Wickelfolie durch Umwicklung mit 50 %er Überlappung hergestellt. Nach der 3000 Stunden-Alterung der Probekörper im Umluftofen (Bedingungen wie bei der Prüfung der Wärmestabilität) werden die Proben bei 23 °C konditioniert und nach ISO/DIN 6722 von Hand um einen Dorn gewickelt, der Wickeldorn einen Durchmesser von 5 mm, das Gewicht hat eine Masse von 5 kg und die Wickelgeschwindigkeit beträgt 1 Umdrehung pro Sekunde. Die Muster werden anschließend visuell auf Fehler in der Wickelfolie und in der Drahtisolierung unter der Wickelfolie untersucht. Der Test ist nicht bestanden, wenn Risse in der Drahtisolierung erkennbar sind, insbesondere wenn dies schon vor dem Biegen auf dem Wickeldorn erkennbar ist. Wenn die Wickelfolie Risse aufweist oder im Ofen geschmolzen ist, gilt der Test ebenfalls als nicht bestanden. Bei der 125 °C-Prüfung wurden teilweise auch Muster zu anderen Zeitpunkten geprüft. Als Prüfzeit gelten 3000 Stunden soweit nicht im Einzelfall ausdrücklich anders beschrieben.

Die Kurzzeitwärmebeständigkeit wird an Kabelbündeln aus 19 Drähten der Type TW mit 0,5 mm² Querschnitt, welche in ISO 6722 beschrieben sind, gemessen. Hierzu wird die Wickelfolie mit 50 % Überlappung auf das Kabelbündel gewickelt, das Kabelbündel um einen Dorn von 80 mm Durchmesser gebogen und in einem Umluftofen bei 140 °C gelagert. Nach 168 Stunden wird das Muster dem Ofen genommen und auf Beschädigungen (Risse) überprüft.

Für die Ermittlung der Hitzebeständigkeit wird die Wickelfolie 30 min. bei 170 °C gelagert, 30 min. auf Raumtemperatur abgekühlt und mit mindestens 3 Windungen mit 50 %-iger Überlappung um einen Dorn von 10 mm Durchmesser gewickelt. Danach wird das Muster auf Beschädigungen (Risse) überprüft.

Beim Kältetest wird der oben beschriebene Probekörper in Anlehnung an ISO/DIS 6722 4 Stunden auf -40 °C abgekühlt und die Probe von Hand auf einen Dorn von 5 mm Durchmesser gewickelt. Die Muster werden visuell auf Fehler (Risse) im Klebeband geprüft.

Die Durchschlagspannung wird nach ASTM D 1000 gemessen. Als Zahl wird der höchste Wert genommen, dem das Muster bei dieser Spannung eine Minute standhält. Diese Zahl wird auf eine Probendicke von 100 µm umgerechnet.

### Beispiel:

Eine Probe von 200 µm Dicke hält nach einer Minute eine maximale Spannung von 6 kV stand, die berechnete Durchschlagspannung beträgt 3 kV/100 µm.

Der Fogging-Wert wird nach DIN 75201 A ermittelt.

Folgende Beispiele sollen die Erfindung erläutern, ohne deren Umfang zu beschränken.

Inhalt:
- Tabellarische Zusammenstellung der für die Versuche verwendeten Rohstoffe
- Beschreibung der Beispiele
- Tabellarische Zusammenstellung der Ergebnisse der Beispiele
- Beschreibung der Vergleichsbeispiele
- Tabellarische Zusammenstellung der Ergebnisse der Vergleichsbeispiele

Tabellarische Zusammenstellung der für die Versuche verwendeten Rohstoffe (die Meßbedingungen Einheiten wurden zum Teil weggelassen, siehe Prüfmethoden)

| Rohstoff | Hersteller | Beschreibung | Technische Daten |
|---|---|---|---|
| Polymer A | | EP modifiziertes PP- | Biegemodul = 80 MPa, |
| | | Random-Copolymer aus | MFI = 0,6, |
| | | Reaktorkaskade, | Tcr = 142 °C, |
| | | Gasphasenverfahren | Dichte = 0,88, |
| | | | Bruchspannung 23 MPa, |
| | | | Yieldspannung 6 MPa |
| Polymer B | | EP modifiziertes PP- | Biegemodul = 80 MPa, |
| | | Random-Copolymer aus | MFI = 14, |
| | | Reaktorkaskade, | Tcr = 142 °C, |
| | | Gasphasenverfahren | Dichte = 0,88, |
| | | | Bruchspannung 16 MPa, |
| | | | Yieldspannung 6 MPa |
| Polymer C | | EP modifiziertes PP- | Biegemodul = 30 MPa, |
| | | Random-Copolymer aus | MFI = 0,6, |
| | | Reaktorkaskade, | Tcr=141°C, |
| | | Gasphasenverfahren | Dichte = 0,87, |
| | | | Bruchspannung 10 MPa |
| Polymer D | | EP modifiziertes PP- | Biegemodul = 400 MPa, |
| | | Random-Copolymer aus | MFI = 0,8, |
| | | einem Reaktor, | Tcr = 140 °C |
| | | Sheripolverfahren | Dichte = 0,9, |
| | | | Bruchspannung 52 MPa |
| Cataloy KS-353 P | SKD Sunrise | EP modifiziertes PP- | Biegemodul = 83 MPa, |
| | | Homopolymer, Pfropfung | MFI = 0,45, |
| | | im Cataloyverfahren | Tcr = 154 °C, |
| | | | Dichte = 0,88, |
| | | | Bruchspannung 10 MPa, |
| | | | Yieldspannung 6,2 MPa |
| Cataloy KS-021 P | SKD Sunrise | EP modifiziertes PP- | Biegemodul = 228 MPa, |
| | | Homopolymer, Pfropfung | MFI = 0,9, |
| | | im Cataloyverfahren | Tcr = 154 °C, |
| | | | Dichte = 0,89, |
| | | | Bruchspannung 12 MPa, |
| | | | Yieldspannung 6,9 MPa |
| Lupolex 18E FA | Basell | LLDPE | Dichte = 0,919, MFI = 0,5 |
| Affinity PL 1840 | Dow Chem. | VLDPE | Dichte = 0,909, MFI = 1 |
| Exact 8201 | Exxon | LLDPE (Metallocen) | Biegemodul = 26 MPa, |
| | | | MFI = 1,1, |
| | | | Tcr = 67 °C, |
| | | | Dichte = 0,88 |
| | | | Bruchspannung 20 MPa, |
| Epsyn 7506 | Copolymer | EPDM-Kautschuk | |
| Adflex KS 359 P | Basell | Ethylenmodifiziertes | Biegemodul = 83 MPa, |
| | | Polypropylen- | MFI = 12, |
| | | homoploymer | Tcr = 154 °C, |
| | | | Dichte = 0,88, |
| | | | Bruchspannung 10 MPa, |
| | | | Yieldspannung 5,0 MPa |
| ESI DE 200 | Dow | Ethylen-Styrol- | |
| | | Interpolymer | |
| Evaflex A 702 | DuPont | EEA | EA = 19 %, MFI = 5 |
| Evaflex P 1905 | DuPont | EVA | VAc = 19 %, MFI = 5 |
| Elvax 470 | DuPont | EVA | VAc = 18 %, MFI = 0,7 |
| Evatane 2805 | Elf Atochem | EVA | VAc = 28 %, MFI = 5 |
| Evatane 1005 VN4 | Elf Atochem | EVA | VAc = 14 %, MFI = 0,7 |
| Escorene UL 00119 | Exxon | EVA | VAc = 19 %, MFI = 0,1 |
| Escorene UL 02133 | Exxon | EVA | VAc = 33, MFI = 21 |
| Tuftec M-1943 | Asahi | Dien-Styrol-Elastomer | |
| | Chemical | | |
| Magnifin H 5 | Martinswerk | Gefälltes | d₅₀ = 1,35 µm, |
| | | Magnesiumhydroxid | plättchenförmig, |
| Magnifin H 5 GV | Martinswerk | Gefälltes | d₅₀ = 1,35 µm, |
| | | Magnesiumhydroxid | plättchenförmig, |
| | | | Polymercoating |
| Kisuma 5 A | Kisuma | Gefälltes | d₅₀ = 1,0 µm, |
| | | Magnesiumhydroxid | plättchenförmig |
| Brucit 15µ | Lehmann&Vo | Gemahlenes | d₅₀ = 4 µm, |
| | ss | Magnesiumhydroxid, | d₉₇ = 18 µm |
| | | | unregelmäßig kugelig, |
| | | | Gehalt an Calciumcar- |
| | | | bonat 2,4 %, |
| | | | 0,5 % Stearinsäure |
| Securoc B 10 | Incemin | Gemahlenes | d₅₀ = 4 µm, |
| | | Magnesiumhydroxid | d₉₇ = 18 µm (gesiebt), |
| | | | unregelmäßig kugelig, |
| | | | 0,3 % Fettsäure |
| Magshizu N-4 | Konoshima | Gefälltes | d₅₀ = 18 µm, |
| | Chemical | Magnesiumhydroxid | plättchenförmig, |
| | | | Fettsäurecaoting |
| Martinal 99200-08 | Martinswerk | Aluminumhydroxid | Coating |
| Exolit AP 750 | Clariant | Ammoniumpolyphosphat | |
| EDAP | Albright & | Ethylendiamin-phosphat | |
| | Wilson | | |
| Flamestab NOR 116 | Ciba-Geigy | Sterisch gehindertes | |
| | | Amin (HAS) | |
| SH 3 | Dow | Calciumcarbonat- | |
| | Chemical | Masterbatch | |
| DE 83 R | Great Lakes | Decabromdiphenyloxid | |
| Antimonoxid TMS | Great Lakes | Diantimontrioxid | |
| Flammruß 101 | Degussa | Flammruß | pH = 7,5 |
| Seast 3 H | Tokai Carbon | Furnaceruß | pH = 9,5 |
| Plasblak PE 1851 | Cabot | Rußmasterbatch | pH = 7,8, |
| | | | 50 % Flammenruß in |
| | | | Polyethylen |
| Petrothene PM 92049 | Equistar | Rußmasterbatch aus | pH = 7,8, 40 % |
| | | Fumaceruß | Furneseruß in Polyethylen |
| Novaexcel F-5 | Rinkagaku/ | Roter Phosphor | |
| | Phosphorous | | |
| | Chemical | | |
| A 0750 | Union | Aminosilan | Vernetzer |
| | Carbide | | |
| AMEO T | Hüls AG | Aminosilan | Vernetzer |
| Irganox 1010 | Ciba-Geigy | Primäres Antioxidant | Sterisch gehindertes |
| | | | Phenol |
| Irganox PS 800 | Ciba-Geigy | Sekundäres Antioxidant | Thiopropionsäureester |
| Irganox PS 802 | Ciba-Geigy | Sekundäres Antioxidant | Thiopropionsäureester |
| Irgafos 168 | Ciba-Geigy | Sekundäres Antioxidant | Phosphit |
| Irganox MD 1024 | Ciba-Geigy | Metalldeaktivator | Schwermetallfänger |
| Primal PS 83D | Rohm & Haas | Acrylathaftklebmasse | Dispersionshaftkleber |
| Acronal DS 3458 | BASF | Acrylathaftklebmasse | Schmelzhaftkleber |
| Rikidyne BDF 505 | Vig te Qnos | Acrylathaftklebmasse | Lösungshaftkleber |
| JB 720 | Johnson | Acrylathaftklebmasse | Dispersionshaftkleber |
| Airflex EAF 60 | Air Products | EVA-Haftklebmasse | Dispersionshaftkleber |
| Desmodur Z 4470 | Bayer | lsocyanat | Vernetzer |
| MPA/X | | | |

### Beispiel 1

Zur Herstellung des Trägerfilmes werden zunächst in einem gleichläufigen Doppelschneckenextruder 100 phr Polymer A, 150 phr Magnifin H 5 GV, 10 phr Flammruß 101, 0,8 phr Irganox 1010, 0,8 phr lrganox PS 802 und 0,3 phr Irgafos 168 compoundiert. Das Magnifin wurde zu je 1/3 in den Zonen 1, 3, und 5 zugegeben.

Die Compoundschmelze wird von der Düse des Extruders zu einem Walzwerk, von dort durch einen Strainer geführt und danach über ein Förderband in den Spalt eines Kalanders vom Typ "inverted L" gespeist. Mit Hilfe der Kalanderwalzen wird ein Film mit glatter Oberfläche in einer Breite von 1500 mm und einer Dicke von 0,08 mm (80 µm) ausgeformt und auf Thermofixierwalzen nachkristallisiert. Der Film wird eine Woche gelagert, auf der Beschichtungsanlage mit Walzen bei 60 °C zur Verbesserung der Planlage egalisiert und nach einer Coronabehandlung mit einem wäßrigen Acrylathaftkleber Primal PS 83 D mittels eines Rakels mit einem Auftragsgewicht von 24 g/m² aufgetragen. Die Trocknung der Kleberschicht erfolgt im Trockenkanal bei 70 °C, die fertige Wickelfolie wird zu Stangen mit 33 m Lauflänge auf 1-Zoll-Kern (25 mm) gewickelt. Das Schneiden erfolgt durch Abstechen der Stangen mittels feststehender Klinge mit nicht sehr spitzem Winkel (straight knife) in 29 mm breite Rollen. Wie auch bei den nachfolgenden Beispielen im Abstechschnitt wird ein Automat aus den in der Beschreibung der Erfindung aufgeführten Gründen eingesetzt.

Diese selbstklebende Wickelfolie zeigt trotz des hohen Füllstoffanteiles eine gute Flexibilität. Des weiteren werden auch ohne Zugabe eines sauerstoffhaltigen Polymers sehr gute Brandeigenschaften erreicht. Die Alterungsbeständigkeit und die Verträglichkeit mit PP- und PA-Kabeln und Polyamidrillrohr sind herausragend.

### Beispiel 2

Die Herstellung erfolgt analog Beispiel 1 mit folgenden Änderungen:

Der Compound besteht aus 100 phr Polymer A, 120 phr Brucit 15µ, 15 phr Flammruß 101, 0,8 phr Irganox 1010, 0,8 phr Irganox PS 802, 0,3 phr Irgafos 168 und 1 phr Irganox MD 1024. Das Brucit wurde zu je ½ in den Zonen 1 und 5 zugeben.

Die daraus hergestellte Trägerfolie wird einer einseitigen Flammvorbehandlung unterzogen und nach 10 Tagen Lagerung mit Acronal DS 3458 mittels eines Walzenauftragswerks bei 50 m/min beschichtet. Die Temperaturbelastung des Trägers wird durch eine gekühlte Gegendruckwalze reduziert. Der Masseauftrag beträgt ca. 35 glm². Eine geeignete Vernetzung wird in-line vor der Aufwicklung durch Bestrahlung mit einer UV-Anlage erreicht, die mit 6 Mitteldruck-Hg-Lampen à 120 W/cm ausgestattet ist. Die bestrahlte Bahn wird zu Stangen mit 33 m Lauflänge auf 1 1/4-Zoll-Kern (31 mm) gewickelt. Die Stangen werden zur Erhöhung der Abrollkraft 5 Stunden in einem Ofen bei 60 °C getempert. Das Schneiden erfolgt durch Abstechen der Stangen mittels feststehender Klinge (straight knife) in 25 mm breite Rollen.

Diese Wickelfolie zeichnet eine noch höhere Flexibilität als die aus Beispiel 1 aus. Die Brandgeschwindigkeit ist für die Anwendung mehr als ausreichend. Die Folie weist eine leicht matte Oberfläche auf. Bei der Applikation sind zwei Finger im Kern unterzubringen, was die Anwendung gegenüber Beispiel 1 erleichtert.

### Beispiel 3

Die Herstellung erfolgt analog Beispiel 1 mit folgenden Änderungen:

Der Compound besteht aus 80 phr Polymer A, 20 phr Evaflex A 702, 120 phr Securoc B 10, 0,2 phr Calciumcarbonat, 10 phr Flammruß 101, 0,8 phr lrganox 1010, 0,8 phr Irganox PS 802 und 0,3 phr Irgafos 168.

Die Folie wird vor der Wickelstation des Kalanders coronabehandelt und auf diese Seite der Klebmasse Rikidyne BDF 505 (unter Zugabe von 1 Gew.-% Desmodur Z 4470 MPA/X auf 100 Gewichtsteile Klebemasse auf Trockengehalt berechnet) mit 23 g/m² aufgetragen. Der Kleber wird in einem Wärmekanal getrocknet und dabei chemisch vemetzt, am Ende des Trockners zu Jumbos gewickelt, nach 1 Woche auf nicht beschichteten Seite leicht coronabehandelt und dabei zu Stangen mit 25 m Lauflänge umgewickelt. Diese werden in einem Ofen 1 Stunde bei 100 °C gelagert. Das Schneiden erfolgt durch Abstechen der Stangen mittels rotierender leicht stumpfer Messer (round blade) in Rollen von 15 mm Breite.

Diese Wickelfolie weist ausgeglichene Eigenschaften aus zeigt eine leicht matte Oberfläche. Die Holding Power liegt über 2000 min (dann Messung abgebrochen). Die Bruchdehnung liegt 36 % niedriger als bei Proben mit Klingenschnitt. Die Abrollkraft liegt 25 % höher als bei Proben ohne Temperung.

### Beispiel 4

Die Herstellung erfolgt analog Beispiel 1 mit folgenden Änderungen:

Der Compound besteht aus 100 phr Polymer A, 120 phr Magnifin H 5 GV, 10 phr Flammruß 101, 2 phr lrganox 1010, 1,0 phr Irganox PS 802, 0,4 phr Irgafos 168.

Die Folie wird nach einer Woche Zwischenlagerung einseitig flammvorbehandelt und mit 30 g/m² (Trockenauftrag) Airflex EAF 60 beschichtet. Die Bahn wird mit einer IR-Lampe Vorgetrocknet und in einem Kanal bei 100 °C endgetrocknet. Anschließend wird das Band zu Jumbos (Großrollen) gewickelt. In einem weiteren Arbeitsgang werden die Jumbos abgewickelt und die uhbeschichtete Wickelfolieseite in einer Schneidmaschine einer schwachen Coronabehandlung zur Steigerung der Abrollkraft unterzogen und durch stumpfen Quetschschnitt (crush cutting, Trümmerschnitt) zu 33 m langen Rollen in 19 nm Breite auf 1 ½-Zoll-Kern (37 mm Innendurchmesser) verarbeitet. Die Bruchdehnung legt 48 % niedriger als bei Proben mit Klingenschnitt. Die Abrollkraft liegt 60 % höher als bei Proben ohne Coronabehandlung. Bei der Applikation sind zwei Finger im Kern unterzubringen, was die Wicklung gegenüber Beispiel 1 erleichtert.

### Beispiel 5

Der Compound wird einem Stiftextruder (Buss) ohne Ruß mit Unterwassergranulierung hergestellt. Nach dem Trocknen wird der Compound in einem Betonmischer mit dem Rußmasterbatch gemischt.

Die Trägerfolie wird auf einer Blasfolienenextrusionsanlage mit nachfolgender Rezeptur hergestellt: 100 phr Polymer B, 100 phr Brucit 15µ, 20 phr Plasblak PE 1851, 0,8 phr Irganox 1076, 0,8 phr Irganox PS 800, 0,2 phr Ultranox 626, 0,6 phr Naugard XL-1. Der Folienschlauch wird geschlitzt und mit einem Dreieck zu einer flachen Bahn geöffnet und über eine Thermofixierstation geführt, einseitig coronabehandelt und eine Woche zur Nachkristallisation gelagert. Die Folie wird an der Beschichtungsanlage über 5 Vorwärmwalzen zu Egalisierung (Verbesserung der Planlage) geführt, ansonsten erfolgt die Beschichtung mit Haftkleber analog Beispiel 1, die Stangen werden 5 Stunden bei 65 C getempert und analog Beispiel 1 geschnitten.

Ohne Thermofixierung weist die Folie einen deutlichen Schrumpf (in der Breite 5 %, längs nicht gemessen) während des Trocknungsvorgangs auf. Die Planlage der frisch hergestellten Folie ist gut, sie wird gleich nach der Extrusion beschichtet, leider sind die Rollen nach drei Wochen Lagerung beim 23 °C schon deutlich teleskopiert. Dieses Problem ist auch durch Temperung der Stangen (10 Stunden bei 70 °C) nicht zu beseitigen.

Danach wird die Folie vor der Beschichtung eine Woche gelagert, die Rollen sind nur noch zu einem Teil telekopiert, allerdings ist die Planlage beim Beschichten so schlecht und der Klebstoffauftrag so ungleichmäßig, daß in der Anlage Vorwärmwalzen eingebaut worden sind.

Die Folien zeichnet sich durch eine gute Hitzebeständigkeit, das heißt ohne Schmelzen und Versprödung, bei einer zusätzlichen Lagerung von 30 min bei 170°C aus.

### Beispiel 6

Die Herstellung erfolgt analog Beispiel 1 mit folgenden Änderungen:

Die Folie enthält 80 phr Polymer C, 20 phr Escorene UL 00119, 130 phr Kisuma 5 A, 15 phr Flammruß 101, 0,8 phr Irganox 1010, 0,8 phr Irganox PS 802, 0,3 phr Irgafos 168.

Dieser Trägerfilm wird auf der einen Seite coronabehandelt und eine Woche gelagert. Die vorbehandelte Seite wird mit einer Haftvermittlerschicht aus Naturkautschuk, Cyclokautschuk und 4,4'-Diisocyanato-diphenylmethan (Lösungsmittel Toluol) von 0,6 g/m² beschichtet und getrocknet. Die Klebmassenbeschichtung wird direkt auf die Haftvermittlerschicht mittels Kommarakel mit einem Auftragsgewicht von 18 g/m² (bezogen auf Trockensubstanz) aufgetragen. Die Klebmasse besteht aus einer Lösung einer Naturkautschukklebemasse in n-Hexan mit einem Feststoffgehalt von 30 Gewichtsprozent. Diese besteht aus 50 Teilen Naturkautschuk, 10 Teilen Zinkoxid, 3 Teilen Kolophoniumharz, 6 Teilen Alkylphenolharz, 17 Teilen Terpenphenolharz, 12 Teilen Poly-β-Pinenharz, 1 Teil Antioxidant lrganox 1076 und 2 Teilen mineralischem Öl. Die Trocknung des Nachstriches erfolgt im Trockenkanal bei 100 °C. Die Folie wird unmittelbar dahinter in einem Verbundschneidautomaten mit einem Messerbalken mit scharfen Klingen in 19 mm Abstand zu Rollen auf Standardklebebandkernen (3 Zoll) geschnitten.

Diese Wickelfolie zeichnet sich trotz hohen Füllstoffanteils durch eine sehr hohe Flexibilität aus, die sich in einem geringen Kraftwert bei 1 % Dehnung widerspiegelt. Diese Wickefolie hat mechanische Eigenschaften ähnlich denen von Weich-PVC-Wickelbändern, wobei sie bezüglich Flammfestigkeit und die Wärmebeständigkeit sogar überlegen ist. Die Holding Power liegt bei 1500 min und die Abrollkraft bei 30 m/min (nicht 300 mm/min) beträgt 5,0 N/cm. Der Fogging-Wert liegt bei 62 % (vermutlich bedingt durch das Mineralöl des Klebstoffs). Die Rolle läßt sich aufgrund des großen Rollendurchmessers nur schräg zwischen Wickelbrett und Kabelbaum durchziehen, wodurch Falten in der Wicklung entstehen.

### Beispiel 7

Die Compounds für die einzelnen Schichten der Folie werden ohne Ruß in einem Kneter mit Extruder und Unterwassergranulierung hergestellt. Die Mischzeit bis zu Homogenisierung ist 2 min, die gesamte Knetzeit bis zum Austrag in den Granulierextruder ist 4 min. Beim Compound für die Schichten 2 und 3 wird die eine Hälfte des Füllstoff zu Anfang und die andere Hälfte nach 1 Minute zugefügt. Nach dem Trocknen werden die Compoundgranulate in einem Betonmischer mit dem Rußmasterbatch gemischt und einer 3-Schicht-Coextrusionsanlage nach dem Cast-Verfahren zugeführt (Düsenbreite 1400 mm, Schmelzetemperatur am Düsenkopf 190 °C, Chill-Roll-Temperatur 30 °C, Geschwindigkeit 30 m/min).

Die Trägerfolie weist folgenden Rezepturaufbau auf:
Schicht 1:
   15 µm 100 phr Evaflex P 1905, 40 phr Magnifin H 5 GV, 20 phr Plasblack PE 1851, 0,4 phr Irganox 1076, 0,2 phr Irgafos 168
Schicht 2:
   40 µm: 100 phr Polymer B, 120 phr Magnifin H 5 GV, 20 phr 20 phr Plasblack PE 1851, 0,8 phr Irganox 1076, 0,8 phr Irganox PS 800, 0,2 phr Irgafos 168
Schicht 3:
   40 µm wie Schicht 2
Schicht 4
   15 µm: 100 phr Escorene UL 02133, 0,4 phr Irganox 1076, 0,2 phr Irgafos 168
Schicht 5
   20 µm Levapren 450

Aufgrund der bei der Blasfolie aufgetretenen Probleme wird die Folie thermofixiert. Die Folie wird nach einer Woche Zwischenlagerung bei 23 °C wie in Beispiel 1 beschichtet, allerdings unter Benutzung der Egalisierwalzen. Die so erhaltene Wickelfolie wird zu Stangen von 20 m Lauflänge gewickelt, welche eine Woche bei 40 °C getempert werden. Das Schneiden erfolgt durch Abstechen der Stangen mittels feststehender Klinge (straight knife).

In einem Vorversuch ist eine Mischzeit von 2 min gewählt worden, die Folie ist homogen (keine Stippen von Füllstoff), aber die Durchschlagspannung nur 3 kV/100µm. Daher wird die Mischzeit trotz der Gefahr eines Abbaus hin erhöht (der Schmelzindex als Maß für den Abbau nimmt durch die längere Zeit aufgrund des Einsatzes von Phosphitstabilisator nur unwesentlich zu). Dieses Material hat keine Klebkraft auf Stahl und eine geringe Haftung auf der Rückseite. Diese reicht aus, daß sich die Windungen nicht gegeneinander verschieben können, am Wickelende ist jedoch Endfixierung mit einer haftklebenden Wickelfolie notwendig.

Durch die Temperung steigt die Abrollkraft so stark an, daß sich die Wickelfolie unter leichter Spannung applizieren läßt. Dies Ausführungsform ist lösungsmittelfrei und einfach herstellbar, da keine Beschichtung erforderlich ist.

Durch die eingefärbte Schicht 1, welche wenig Flammschutzmittel enthält, zeigt die Wickelfolie bei starker Dehnung fast keinen Weißbruch. Der Fogging-Wert liegt bei 97 %. Bei der Applikation sind zwei Finger im Kern unterzubringen, was die Wicklung gegenüber Beispiel 1 erleichtert, ohne daß das in Beispiel 6 beschriebene Problem auftritt.

Die Folie zeichnet sich gegenüber den anderen Beispielen und den Vergleichsbeispielen auf Basis von Polyolefin und Magnesiumhydroxid aus, daß bei einer Dehnung von über 20 % kein Weißbruch erkennbar ist, da die äußerste Schicht nur einen geringen Füllstoffanteil aufweist der auch an das polare Polymer gut angebunden ist. Durch den Gehalt an polarem Polymer ist das Brandverhalten trotzdem ausgezeichnet und durch die polypropylenhaltigen Schichten wird das Schmelzen der Folie verhindert.

### Beispiel 8

Die Herstellung erfolgt analog Beispiel 1 mit folgenden Änderungen:
Der Compound besteht aus 30 phr Polymer D, 70 phr Exact 8201, 50 phr Exolit AP 750, 0,3 phr Flamestab NOR 116, 10 phr Plasblack PE 1851, 0,8 phr Irganox 1010, 0,6 phr Irgafos 168. Die weitere Bearbeitung erfolgte wie in Beispiel 1, das Schneiden erfolgt wie in Beispiel 6.

Diese Folie zeichnet sich durch eine verbesserte Handeinreißbarkeit aus.

**Eigenschaften der Beispiele**

| | ***Beispiel 1*** | ***Beispiel 2*** | ***Beispiel 3*** | ***Beispiel 4*** | ***Beispiel 5*** | ***Beispiel 6*** | ***Beispiel 7*** | ***Beispiel 8*** |
|---|---|---|---|---|---|---|---|---|
| Foliendicke [mm] | 0,08 | 0,09 | 0,095 | 0,085 | 0,06 | 0,11 | 0,13 | 0,08 |
| Klebkraft Stahl [N/cm] | 2,9 | 3,0 | 2,4 | 1,9 | 2,8 | 3,0 | 1,9 | 2,9 |
| Klebkraft auf eigener Rückseite [N/cm] | 1,9 | 2,2 | 1,8 | 1,6 | 1,7 | 1,8 | 1,7 | 1,8 |
| Abrollkraft [N/cm] | 2,2 | 2,4 | 2,0 | 1,8 | 2,5 | 2,7 | 2,0 | 2,0 |
| Reißkraft* [N/cm] | 10,2 | 7,2 | 11,1 | 6,8 | 4,1 | 9,0 | 7,5 | 7,5 |
| Reißdehnung* [%] | 760 | 980 | 860 | 830 | 600 | 1044 | 770 | 750 |
| Kraft bei 1 % Dehnung [N/cm] | 2,1 | 2,8 | 2,1 | 2,0 | 1,4 | 1,7 | 2,0 | 1,3 |
| Kraft bei 100 % Dehnung [N/cm] | 5,7 | 8,5 | 9,7 | 5,1 | 3,2 | 5,3 | 5,5 | 4,3 |
| Reißdehnung* nach 20d@ 136°C [%] | 380 | 570 | 410 | 620 | 350 | 530 | 520 | 150 |
| Reißdehnung* nach 3000h@105°C >100% | ja | ja | ja | ja | ja | ja | ja | ja |
| Wärmebeständigkeit 168h@140°C | ja | ja | ja | ja | ja | ja | ja | ja |
| Hitzebeständigkeit 30 min@170 °C | ja | ja | ja | ja | ja | ja | ja | ja |
| Kompatibilität mit PE-und PP-Kabeln 3000h@105°C | keine Versprödung | keine Versprödung | keine Versprödung | keine Versprödung | keine Versprödung | keine Versprödung | keine Versprödung | keine Versprödung |
| Kompatibilität mit PE-und PP-Kabeln 2000h@125°C | keine Versprödung | Keine Versprödung | keine Versprödung | keine Versprödung | Wickelfolie spröde | keine Versprödung | keine Versprödung | keine Versprödung |
| Handeinreißbarkeit | ++ | ++ | + | ++ | +++ | -- | ++ | +++ |
| LOI [%] | 22,1 | 20,3 | 22,0 | 20,1 | 20,0 | 24,1 | 20,5 | 25,8 |
| Brennrate FMVSS 302 [mm/min] | 51 | 170 | 63 | 160 | 183 | selbstverlöschend | 197 | selbstverlöschend |
| Durchschlagspannung [kV/100µm] | 6 | 5 | 6 | 5 | 7 | 6 | 5 | 4 |
| Fogging-Wert | 95 | 92 | 94 | 99 | 93 | 62 | 97 | 95 |
| Halogenfreiheit | ja | ja | ja | ja | ja | ja | ja | ja |
| Phosphorgehalt >0,5 phr | ja | ja | ja | ja | ja | ja | ja | ja |

| | | | | | | | | |
|---|---|---|---|---|---|---|---|---|
| * an mit Klingen geschnittenen Mustern | | | | | | | | |

### Vergleichsbeispiel 1

Zur Beschichtung wird eine konventionelle Folie für Isolierband von Singapore Plastic Products Pte. unter der Bezeichnung F2104S eingesetzt. Die Folie enthält nach Herstellerangaben ca. 100 phr (parts per hundred resin) Suspensions-PVC mit dem K-Wert 63 bis 65, 43 phr DOP (Di-2-ethylhexylphthalat), 5 phr dreibasisches Bleisulfat (TLB, Stabilisator), 25 phr gemahlene Kreide (Bukit Batu Murah Malaysia mit FettsäureCoating), 1 phr Furnaceruß und 0,3 phr Stearinsäure (Gleitmittel). Die Nenndicke beträgt 100 µm und die Oberfläche ist glatt aber matt.

Auf der einen Seite wird der Primer Y01 von Four Pillars Enterprise/Taiwan aufgetragen (analytisch acrylatmodifizierter SBR-Kautschuk in Toluol) und darauf 23 g/m² des Klebstoffs IV9 von Four Pillars Enterprise/Taiwan (analytisch feststellbare Hauptkomponente: SBR und Naturkautschuk, Terpenharz und Alkylphenolharz in Toluol). Die Folie wird unmittelbar nach dem Trockner mit einem Messerbalken mit scharfen Klingen in 25 mm Abstand in einem Verbundschneidautomaten zu Rollen geschnitten.

Die Reißdehnung nach 3000 h bei 105 °C ist nicht meßbar, da das Muster durch Weichmacherverdampfung in kleine Stücke zerfallen ist. Nach 3000 h bei 85 °C beträgt die Reißdehnung 150 %

### Vergleichsbeispiel 2

Das Beispiel 4 der EP 1 097 976 A1 wird nachgearbeitet.

Folgende Rohstoffe werden -wie in Beispiel 7 beschrieben- in einem Kneter compoundiert: 80 phr Cataloy KS-021 P, 20 phr Evaflex P 1905, 100 phr Magshizu N-4, 8 phr Norvaexcel F-5, 2 phr Seast 3H und granuliert, wobei die Mischzeit jedoch 2 min beträgt.

In einem Vorversuch stellt sich heraus, daß bei 4 min Mischzeit der Schmelzindex des Compounds um 30 % zunimmt (was an dem Fehlen eines Phosphitstabilisators liegen kann oder an dem stärkeren mechanisch Abbau aufgrund des extrem niedrigen Schmelzindex des Polypropylenpolymers). Obwohl der Füllstoff vorgetrocknet worden ist und sich über dem Knetcompunder eine Abluftvorrichtung befindet, entsteht an der Anlage beim Kneten ein penetranter Phosphingeruch.

Die Trägerfolie wird anschließend mittels Extrusion wie in Beispiel 7 beschrieben (wobei alle drei Extruder mit dem selben Compound befüttert werden) über eine Schlitzdüse und Kühlwalze in einer Dicke von 0,20 mm hergestellt, wobei die Extruderdrehzahl reduziert wird, bis die Folie eine Geschwindigkeit von 2 m/min erreicht.
Bei einem Vorversuch kann die Geschwindigkeit von 30 m/min wie in Beispiel 7 nicht erreicht worden, da sich die Anlage wegen überhöhten Druckes abschaltet (zu hohe Viskosiät). I n einem weiteren Vorversuch wird die Folie mit 10 m/min gefertigt, die mechanischen Daten in Längs- und Querrichtung wiesen auf eine starke Längsorientierung, was sich beim Beschichten durch einen Schrumpf von 20 % in Laufrichtung bestätigt. Daher wird der Versuch mit noch geringer Geschwindigkeit wiederholt, was zu einer technisch einwandfreien (einschließlich Stippenfreiheit), aber wirtschaftlich nicht tragbaren Folie führte.

Die Beschichtung erfolgt analog Beispiel 3 jedoch mit einem Klebstoffauftrag von 30 g/m² (dieser Kleber hat eine ähnliche Zusammensetzung wie die der Originalkleber des nachgearbeiteten Patentbeispiels). Die Folie wird unmittelbar nach dem Trockner mit einem Messerbalken mit scharfen Klingen zu 25 mm breiten Streifen zerteilt und im Verbund zu Rollen gewickelt.

Das selbstklebende Wickelband zeichnet sich durch fehlende Flexibilität aus. Gegenüber Beispiel 5 beziehungsweise 6 liegt die Steifigkeit des Vergleichsbeispiels 2 um 4030 % beziehungsweise 19000 % höher.
Die Steifigkeit läßt sich bekanntermaßen aus der Dicke und der Kraft bei 1 % Dehnung (proportional dem E-Modul) leicht berechnen. Das Muster weist aufgrund des Gehaltes an rotem Phosphor und der relativ hohen Dicke ein sehr gutes Brandverhalten aus (Hinweis: Der LOI-Wert wurde an der 0,2 mm dicken Probe mit Klebstoff gemessen, der LOt von 30 % in der zitierten Patenschrift stammt jedoch von einem 3 mm starkem Prüfling ohne Klebstoff).

### Vergleichsbeispiel 2a

Die Durchschlagspannung von 2 kV/100µm des Vergleichsbeispiels 2 ist für die Anwendung als Isolierband zu gering, um bei Dicken, die eine akzeptable Flexibilität ermöglichen, eine hinreichende absolute Durchschlagspannung zu erreichen. Die geringe Bruchdehnung weist auf Inhomogenitäten, die zwar die Handeinreißbarkeit positiv, jedoch die Durchschlagsspannung negativ beeinflussen.

In einem ergänzenden Versuch 2a wird der Compound intensiver gemischt.
Hierdurch wird eine Verbesserung der Durchschlagsspannung auf 4 kV/100 µm erreicht, was jedoch mit einer Verschlechterung der Handeinreißbarkeit und Anhebung der Bruchdehnung auf 570 % einhergeht.

Durch Anwendung des erfindungsgemäßen Schneidverfahrens wäre die Handeinreißbarkeit vermutlich akzeptabel.

Die Beispiele der EP 1 097 976 A1 weisen eine Bruchdehnung in der Größenordnung von 300 % auf, was generell auf schlechte Durchmischung und damit niedrige Bruchdehnung und niedrige Durchschlagsspannungen hinweist.

### Vergleichsbeispiel 2b

Aufgrund der aufgetretenen technischen Probleme wird versucht, unter Bedingungen wie Beispiel 1 mit einem Kalanderprozeß zu fertigen, nachdem vorher zufällig gefunden worden ist, daß ein niedriger Schmelzindex beim Polypropylenpolymer für den Kalanderprozeß kein Problem darstellt, sondern im Gegenteil sogar eine fast zwingende Voraussetzung ist.

Da die Rezeptur des Beispiels 4 der EP 1 097 976 A1 von den mechanischen Eigenschaften her unzulänglich ist, wird die Rezeptur aus Versuch 1 verarbeitet: 80 phr Cataloy KS-353 P, 20 phr Evaflex A 702, 100 phr Magshizu N-4, 8 phr Norbaexcell F5, 2 phr Seast 3H.

Die Mischung klebt so stark an den Kalanderwalzen, daß kein Folienmuster erzeugt werden kann. Daher werden erst 0,2 phr Stearinsäure als übliches Lubricant zugefügt und mangels Abhilfe zusätzlich noch 5 phr Baerostab UBZ 639 (gängiges Kalanderadditiv-Paket aus Stabilisator und Lubricant von Baerlocher), was das Verarbeitungsproblem auch nicht löst.

Die Ursache wird in dem hohen Gehalt an EEA-Polymer gesehen, da EEA und EVA eine hohe spezifische Adhäsion auf Chrom und Stahl aufweisen. Wie der Fachmann erkennt, wäre das Problem durch massive Erhöhung des Füllstoffgehaltes eventuell lösbar, da aber ein aus dem Compound hergestellter 0,2 mm dicker Preßling schon zu steif erscheint, hätte eine höher gefüllte Folie erst recht keine Aussicht auf ausreichende Flexibilität.

### Vergleichsbeispiel 3

Das Beispiel A der WO 97/05206 A1 wird nachgearbeitet.

Die Herstellung des Compounds wird nicht beschrieben. Die Komponenten werden daher auf einem Doppelschneckenlaborextruder von 50 cm Länge und einem UD-Verhältnis von 1:10 gemischt: 9,59 phr Evatane 2805, 8,3 phr Attane SL 4100, 82,28 phr Evatane 1005 VN4, 74,3 phr Martinal 99200-08, 1,27 phr lrganox 1010, 0,71 phr AMEO T, 3,75 Masterbatch schwarz (hergestellt aus je 50 Gew.-% Polyethylen mit MFI = 50 und Furnace Seast 3 H), 0,6 phr Stearinsäure, 0,60 phr Luwax AL 3.
Der Compound wird granuliert, getrocknet und auf einer Laboranlage zu einer Schlauchfolie verblasen und beidseitig geschlitzt. Es wird versucht, die Folie nach Coronavorbehandlung mit Klebstoff analog Beispiel 1 zu beschichten, sie weist jedoch zu starken Schrumpf in Quer- und Längsrichtung auf, die Rollen sind nach 4 Wochen wegen zu hoher Abrollkraft kaum noch abwickelbar.

Daher folgt ein Versuch der Beschichtung mit einem unpolaren Kautschukleber wie in Beispiel 6, welcher aber an der Lösungsmittelempfindlichkeit der Folie scheitert. Da die angegebene Schrift eine Klebstoffbeschichtung nicht beschreibt, wohl aber anzustrebende klebtechnische Eigenschaften, wird die Folie im Scherenschnitt zwischen einem Satz aus Paaren von je zwei rotierenden Messern zu 25 mm breiten Streifen zerschnitten und gewickelt.

Das selbstklebende Wickelband zeichnet sich durch eine gute Flexibilität und Flammwidrigkeit aus. Die Handeinreißbarkeit ist jedoch nicht ausreichend. Besonders nachteilig ist jedoch die geringe Wärmeformbeständigkeit, die zum Schmelzen des Klebebandes bei der Durchführung der Alterungsteste führt. Des weiteren führt das Wickelband zu einer erheblichen Verkürzung der Lebensdauer der Kabelisolierung durch Versprödung. Die hohe Schrumpfneigung ist durch den zu niedrigen Schmelzindex des Compounds bedingt. Auch bei höherem Schmelzindex der Rohstoffe sind Probleme zu erwarten, obwohl dadurch der Schrumpf deutlich geringer wird, denn eine Thermofixierung ist trotz des geringen Erweichungspunktes der Folie in der genannten Schrift nicht vorsehen. Da das Produkt keine signifikante Abrollkraft aufweist, ist es kaum auf Drahtbündeln applizierbar. Der Fogging-Wert liegt bei 73 % (vermutlich bedingt durch das Paraffinwachs).

### Vergleichsbeispiel 4

Das Beispiel 1 der EP 0 953 599 A1 wird nachgearbeitet.

Die Herstellung des Compounds wird wie beschrieben auf einem Einschneckenlaborextruder gemischt: 85 phr Lupolex 18 E FA, 6 phr Escorene UL 00112, 9 phr Tuftec M-1943, 63 phr Magnifin H 5, 1,5 phr Magnesiumstearat, 11 phr Novaexcel F 5, 4 phr Seast 3 H, 0,2 phr Irganox 1010, 0,2 phr Tinuvin 622 LD, wobei eine deutliche Freisetzung von Phosphin zu riechen ist.

Die Folienherstellung erfolgt wie in Vergleichsbeispiel 3.

Die Folie weist jedoch eine große Zahl an Füllstoffstippen und kleinen Löchern auf und die Blase reißt während des Versuchs mehrfach ab. Die Durchschlagsspannung streut stark von 0 bis 3 kV/100 µ. Daher wird das Granulat zur weiteren Homogenisierung im Extruder erneut aufgeschmolzen und granuliert. Der jetzt erhaltene Compound weist nur noch eine geringe Anzahl an Stippen auf. Beschichtung und Schneiden erfolgt analog Beispiel 1.

Das selbstklebende Wickelband zeichnet sich auf Grund der Verwendung von rotem Phosphor durch sehr gut Flammfestigkeit aus. Da das Produkt keine Abrollkraft aufweist, ist es kaum auf Drahtbündeln applizierbar. Die Wärmestandsbeständigkeit ist wegen des niedrigen Schmelzpunktes unzureichend.

### Vergleichsbeispiel 5

Auf einen textilen Träger vom Typ Vlies-Faden-Nähgewirke Maliwatt (80 g/m², Feinheit 22, schwarz, Dicke ca. 0,3 mm) wird mittels Düsenbeschichtung eine UV-vernetzbare Actylat-Hotmelt-Klebemasse vom Typ Acronal DS 3458 bei 50 m/min aufgetragen. Die Temperaturbelastung des Trägers wird mittels einer gekühlten Gegendruckwalze reduziert. Der Masseauftrag beträgt ca. 65 g/m². Eine geeignete Vernetzung wird in-line vor der Aufwicklung durch Bestrahlung mit einer UV-Anlage erreicht, die mit 6 Mitteldruck-Hg-Lampen à 120 W/cm ausgestattet ist. Die Ballen werden im Scherenschnitt (zwischen einem Satz paarweise leicht versetzter rotierender Messer) zu Rollen auf Standard-3-Zoll-Keme konfektioniert.

Dieses Wickelband zeichnet sich durch gute klebtechnische Eigenschaften sowie durch eine sehr gute Kompatibilität zu verschiedenen Kabelisolierungsmaterialien (PVC, PE, PP) und Rillrohren aus. Aus anwendungstechnischer Sicht sind jedoch die hohe Dicke und die fehlende Handeinreißbarkeit sehr nachteilig.

### Vergleichsbeispiel 6

Das Beispiel 1 der US 5,498,476 A1 wird nachgearbeitet.

Folgende Mischung wird in einem Brabender-Plastographen (Mischzeit 5 min.) hergestellt: 80 phr Elvax 470, 20 phr Epsyn 7506, 50 phr EDAP, 0,15 phr A 0750, 0,15 phr Irganox 1010.

Der Compound wird in einer beheizten Presse zwischen zwei Blättern silikonisierter Polyesterfolie zu 0,2 mm dicken Prüflingen gepreßt, welche in 25 mm breite und 25 cm langen Streifen geschnitten und auf einem Kern zu einer kleinen Rolle aufgewickelt werden. Eine Beschichtung mit Klebstoff erfolgt gemäß der Schrift nicht.

Diese Wickelfolie weist weder eine annehmbare Flexibilität noch Beständigkeit gegen Schmelzen auf. Da das Produkt keine Abrollkraft aufweist, ist es kaum auf Drahtbündeln applizierbar. Sie ist schwer handeinreißbar. Die Durchschlagspannung liegt relativ hoch, da Mischung offensichtlich sehr homogen ist, der Brabendermischer mischt sehr intensiv und auch das Aminosilan könnte eine positiven Beitrag leisten, wofür die Kraft-Dehnungs-Kurven der zitierten Patentschrift sprechen.

### Vergleichsbeispiel 7

Das Beispiel 1 der WO 00/71634 A1 wird nachgearbeitet.

Folgende Mischung wird in einem Kneter hergestellt: 80,8 phr ESI DE 200, 19,2 phr Adflex KS 359 P, 30,4 phr Calciumcarbonat-Masterbatch SH3, 4,9 phr Petrothen PM 92049, 8,8 phr Antimonoxid TMS und 17,6 phr DE 83-R.
Der Compound wird auf einer Cast-Laboranlage zu Flachfolie verarbeitet, Corona vorbehandelt, 20 g/m² JB 720 beschichtet, auf Stangen mit 3-Zoll-Kern gewickelt und durch Abstechen mit feststehender Klinge (Vorschub von Hand) geschnitten.

Dieses Wickelband zeichnet sich durch PVC-ähnliches mechanisches Verhalten aus, daß heißt hohe Flexibilität und gute Handeinreißbarkeit. Nachteilig ist der Einsatz von bromhaltigen Flammschutzmitteln. Des weiteren ist die Wärmeformbeständigkeit bei Temperaturen oberhalb von 95 °C gering, so daß die Folie bei den Alterung- und Verträglichkeitstesten schmilzt.

**Eigenschaften der Vergleichsbeispiele**

| | Vergleichsbeispiel 1 | Vergleichsbeispiel 2 | Ver gleichsbeispiel 3 | Vergleichsbeispiel 4 | Vergleichsbeispiel 5 | Vergleichsbeispiel 6 | Vergleichsbeispiel 7 |
|---|---|---|---|---|---|---|---|
| Foliendicke [mm] | 0,08 | 0,20 | 0,15 | 0,20 | 0,29 | 0,20 | 0,125 |
| Klebkraft Stahl [N/cm] | 1,8 | 3,3 | 2,0 | 1,9 | 5,1 | 2,2 | 2,3 |
| Klebkraft auf eigener Rückseite [N/cm] | 1,6 | 1,5 | 1,8 | 1,4 | 1,5 | 1,6 | 1,2 |
| Abrollkraft [N/cm] | 2,0 | 1,8 | 1,9 | 1,7 | 3,5 | 2,1 | 1,5 |
| Reißkraft* [N/cm] | 15 | 10,9 | 22,3 | 44,0 | 51,3 | 16,1 | 22,5 |
| Reißdehnung* [%] | 150 | 370 | 92 | 720 | 72 | 720 | 550 |
| Kraft bei 1 % Dehnung [N/cm] | 1,0 | 11,4 | 4,3 | 5,9 | 5,2 | 3,5 | 0,46 |
| Kraft bei 100 % Dehnung [N/cm] | 14,0 | 9,2 | - | 19,8 | - | 9,1 | 6,3 |
| Reißdehnung* nach 20d@136°C [%] | versprödet | versprödet | geschmolzen | geschmolzen | 60 | geschmolzen | geschmolzen |
| Reißdehnung* nach 3000@105°C >100% | versprödet | versprödet | ja | ja | nicht versprödet | versprödet | versprödet |
| Kompatibilität mit PE-und PP-Kabeln 3000h@105°C | nein | PE ja PP nein | Kabel versprödet | Tape brüchig | ja | nein | Tape brüchig |
| Wärmebeständigkeit 168h@140 °C | nein | ja | nein | nein | ja | nein | nein |
| Hitzebeständigkeit 30 min@170°C | nein | ja | nein | nein | ja | nein | nein |
| Kompatibilität mit PE-und PP-Kabein 2000h@125°C | nein | nein | Tape geschmolzen | Tape geschmolzen | ja | nein | Tape geschmolzen |
| Handeinreißbarkeit | +++ | - | - | - | - | + | + |
| LOI [%] | 21,4 | 27,1 | 19,3 | 28,3 | 20,5 | 17,9 | 32,6 |
| Brennrate nach FMVSS 302 [mm/min] | 324 | selbstverlöschend | 463 | selbstverlöschend | 362 | 213 | selbstverlöschend |
| Durchschlagspannung [kV/100µm] | 4 | 2 | 3 | 3 | 4 | 4 | 4 |
| Fogging-Wert | 29 | 66 | 73 | 63 | 99 | 53 | 73 |
| Halogenfrei | nein | ja | ja | ja | ja | ja | nein |
| Phosphorgehalt <0,5 phr | ja | nein | ja | nein | ja | nein | ja |

| | | | | | | | |
|---|---|---|---|---|---|---|---|
| *an mit Klingen geschnittenen Mustern | | | | | | | |

## Patentansprüche

1. Wickelfolie aus Polypropylencopolymeren mit einer Dicke von 30 bis 180 µm, wobei die Kraft in Laufrichtung bei 1 % Dehnung einen Wert von 0,6 bis 4 N/cm und
die Kraft bei 100 % Dehnung einen Wert von 2 bis 20 N/cm aufweist,
der Kristallitschmelzpunkt des Polypropylencopolymers kleiner als 166 °C ist und
der Anteil an Flammschutzmittel mindestens 40 phr beträgt.

2. Wickelfolie nach Anspruch 1, **dadurch gekennzeichnet, daß**
die Dicke der Wickelfolie 50 bis 150 µm, insbesondere 55 bis 100 µm,
die Kraft in Laufrichtung bei 1 % Dehnung 1 bis 3 N/cm und/oder
die Kraft bei 100 % Dehnung 3 bis 10 N/cm beträgt.

3. Wickelfolie nach Anspruch 1 oder 2, **dadurch gekennzeichnet, daß**
die Wickelfolie mindestens ein Polypropylencopolymer
mit einem Biegemodul von weniger als 500 MPa, bevorzugt von 80 oder weniger und besonders bevorzugt von 30 MPa oder weniger, und/oder
mit einem Kristallitschmelzpunkt von unter 148 °C, vorzugsweise unter 145 °C, besonders vorzugsweise im Bereich von 120 °C bis 166 °C, enthält.

4. Wickelfolie nach zumindest einem der Ansprüche 1 bis 3, **dadurch gekennzeichnet, daß** das Polypropylencopolymer in einem Verfahren erzeugt wird, in dem ein PP-Homopolymer oder PP-Randomcopolymer weiter mit Ethylen und Propylen umgesetzt wird.

5. Wickelfolie nach zumindest einem der vorhergehenden Ansprüche, **dadurch gekennzeichnet, daß** sie frei von rotem Phosphor ist und vorzugsweise der Gehalt an chemisch gebunden Phosphor 0,5 phr nicht überschreitet.

6. Wickelfolie nach zumindest einem der vorhergehenden Ansprüche, **dadurch gekennzeichnet, daß** die Wickelfolie
ein- oder beidseitig, insbesondere einseitig, eine Kleberschicht, die vorzugsweise auf der Basis von Polyisopren, Ethylenvinylacetatcopolymer und/oder Polyacrylat ist, und
gegebenenfalls eine Primerschicht zwischen Folie und Kleberschicht aufweist,
wobei die Menge der Kleberschicht jeweils 10 bis 40 g/m², vorzugsweise 18 bis 28 g/m² beträgt,
die Klebkraft auf Stahl 1,5 bis 3 N/cm,
die Abrollkraft 1,2 bis 6,0 N/cm bei 300 mm/min Abrollgeschwindigkeit, bevorzugt 1,6 bis 4,0 N/cm, besonders bevorzugt 1,8 bis 2,5 N/cm, und/oder
die Holding Power mehr als 150 min beträgt.

7. Wickelfolie nach zumindest einem der vorherigen Ansprüche, **dadurch gekennzeichnet, daß** die Wickelfolie eine lösungsmittelfreie Haftklebemasse aufweist, welche durch Coextrusion, Schmelzbeschichtung oder Dispersionsbeschichtung erzeugt wird, bevorzugt einen Dispersionshaftkleber und insbesondere einen solchen auf Polyacrylat-Basis, wobei diese Klebemasse vermittels einer Flamm- oder Coronavorbehandlung oder einer Haftvermittlerschicht, welche durch Coextrusion oder Beschichtung aufgebracht wird, mit der Oberfläche der Trägerfolie verbunden ist.

8. Wickelfolie nach zumindest einem der vorherigen Ansprüche, **dadurch gekennzeichnet, daß** der flammhemmende Füllstoff zu 70 bis 200 phr, vorzugsweise zu 110 bis 150 phr, zugesetzt wird,
insbesondere ein Magnesiumhydroxid.

9. Wickelfolie nach zumindest einem der vorherigen Ansprüche, **dadurch gekennzeichnet, daß** der Anteil Ruß mindestens 5 phr, vorzugsweise mindestens 10 phr beträgt, wobei der Ruß bevorzugt einen pH-Wert von 6 bis 8 aufweist.

10. Wickelfolie nach zumindest einem der vorherigen Ansprüche, **dadurch gekennzeichnet, daß** die Wickelfolie weichmacherfrei ist oder der Weichmachergehalt so niedrig ist, daß der Fogging-Wert über 90 % liegt.

11. Verfahren zur Herstellung einer Wickelfolie nach zumindest einem der vorherigen Ansprüche, **dadurch gekennzeichnet daß**
die Compoundierung in einem Kneter oder Extruder so gründlich vorgenommen wird, daß die aus dem Compound gefertigte Folie eine Durchschlagspannung von mindestens 3 kV/100 µm, vorzugsweise mindestens 5 kV/100 µm, erreicht,
der flammhemmenden Füllstoff bei der Herstellung des Compounds nicht auf einmal sondern mindestens in zwei Portionen zugegeben wird, und/oder
der Compound ohne eine Zwischenstufe in fester Form der Folienherstellung durch Extrusion oder Kalandrieren geschmolzen zugeführt wird.

12. Verfahren zur Herstellung einer Wickelfolie nach zumindest einem der vorherigen Ansprüche, durch
Kalanderverarbeitung, wobei der Schmelzindex des Polypropylencopolymers unter 5 g/10 min, vorzugsweise unter 1 g/10 min und insbesondere unter 0,7 g/10 min, und/oder
Extrusionsverarbeitung, wobei der Schmelzindex des Polypropylencopolymers zwischen 1 und 20 g/10 min, insbesondere zwischen 5 und 15 g/10 min, liegt.

13. Verfahren zur Herstellung einer Wickelfolie nach zumindest einem der vorherigen Ansprüche, wobei
• die Wickelfolie zu Stangen gewickelt wird, welche dann zur Erhöhung der Abrollkraft getempert und anschließend zu Rollen geschnitten werden, wobei die Abrollkraft des so hergestellten Materials bei 300 mm/min vorzugsweise um mindestens 50 % höher liegt als ohne eine solche Maßnahme, oder
• die Wickelfolie zur Erhöhung der Abrollkraft einer Flamm- oder Coronabehandlung unterzogen wird oder mit einer polaren Coextrusionsschicht versehen wird und anschließend zu Rollen verarbeitet wird, wobei die Abrollkraft des so hergestellten Materials bei 300 mm/min vorzugsweise um mindestens 50 % höher liegt als ohne eine solche Maßnahme oder,
• die Wickelfolie durch ein Verfahren geschnitten wird, welches durch rauhe Schnittkanten zur leichteren Handeinreißbarkeit führt, wobei die Bruchdehnung der so geschnittenen Wickelfolienrollen vorzugsweise um mindestens 30 % niedriger liegt als beim Schnitt mit scharfen Klingen,
• die Wickelfolie durch ein Verfahren geschnitten wird, welches durch rauhe Schnittkanten zur leichteren Handeinreißbarkeit führt, wobei die Bruchdehnung der so geschnittenen Wickelfolienrollen vorzugsweise im Bereich von 200 bis 500 % liegt,
• die Wickelfolie auf einem Abstechautomaten mit definierter Messervorschubgeschwindigkeit geschnitten wird,
• die Wickelfolie auf einem Kern mit 30 bis 40 mm Innendurchmesser, vorzugsweise aus Pappe, gewickelt wird.

14. Verwendung einer Wickelfolie nach zumindest einem der vorherigen Ansprüche zum Bündeln, Schützen, Kennzeichnen, Isolieren oder Abdichten von Lüftungsrohren oder Drähten oder Kabeln und zum Ummanteln von Kabelsätzen in Fahrzeugen oder Feldspulen für Bildröhren.

## Claims

1. Winding film of polypropylene copolymer, having a thickness of 30 to 180 µm, wherein
the force in machine direction at 1% elongation has a value of 0.6 to 4 N/cm and
the force at 100% elongation has a value of 2 to 20 N/cm,
the crystallite melting point of the polypropylene copolymer is less than 166°C, and
the fraction of flame retardant is at least 40 phr.

2. Winding film according to Claim 1, **characterized in that**
the thickness of the winding film is 50 to 150 µm, in particular 55 to 100 µm,
the force in machine direction at 1% elongation is 1 to 3 N/cm and/or
the force at 100% elongation is 3 to 10 N/cm.

3. Winding according to Claim 1 or 2, **characterized in that**
the winding film comprises at least one polypropylene copolymer
having a flexural modulus of less than 500 MPa, preferably of 80 or less and more preferably of 30 MPa or less, and/or
having a crystallite melting point of below 148°C, preferably below 145°C, more preferably in the range from 120°C to 166°C.

4. Winding film according to at least one of Claims 1 to 3, **characterized in that** the polypropylene copolymer is produced in a process in which a PP homopolymer or random PP copolymer is further reacted with ethylene and propylene.

5. Winding film according to at least one of the preceding claims, **characterized in that** it is free from red phosphorus and preferably the amount of chemically bonded phosphorus does not exceed 0.5 phr.

6. Winding film according to at least one of the preceding claims, **characterized in that** the winding film has on one or both sides, especially one side, a layer of adhesive, which is preferably based on polyisoprene, ethylene-vinyl acetate copolymer and/or polyacrylate, and if desired has a primer layer between film and adhesive layer,
the amount of the adhesive layer being in each case 10 to 40 g/m², preferably 18 to 28 g/m²,
the bond strength to steel being 1.5 to 3 N/cm,
the unwind force being 1.2 to 6.0 N/cm at 300 mm/min unwind speed, preferably 1.6 to 4.0 N/cm, more preferably 1.8 to 2.5 N/cm, and/or
the holding power being more than 150 min.

7. Winding film according to at least one of the preceding claims, **characterized in that** the winding film comprises a solvent-free pressure-sensitive adhesive which is produced by coextrusion, melt coating or dispersion coating, preferably a pressure-sensitive dispersion adhesive and in particular one based on polyacrylate, this adhesive being joined to the surface of the carrier film by means of flame or corona pretreatment or of an adhesion promoter layer which is applied by coextrusion or coating.

8. Winding film according to at least one of the preceding claims, **characterized in that** the flame-retardant filler is added at 70 to 200 phr, preferably at 110 to 150 phr,
in particular a magnesium hydroxide.

9. Winding film according to at least one of the preceding claims, **characterized in that** the fraction of carbon black is at least 5 phr, preferably at least 10 phr, the carbon black preferably having a pH of 6 to 8.

10. Winding film according to at least one of the preceding claims, **characterized in that** the winding film is plasticizer-free or the plasticizer content is so low that the fogging number is above 90%.

11. Process for producing a winding film of at least one of the preceding claims,
**characterized in that**
the compounding is performed in a kneader or extruder so thoroughly that the film manufactured from the compound achieves a breakdown voltage of at least 3 kV/100 µm, preferably at least 5 kV/100 µm,
the flame-retardant filler is added not all at once when producing the compound, but instead in at least two portions, and/or
the compound is supplied as a melt without an intermediate stage in solid form to the operation of film production by extrusion or calendering.

12. Process for producing a winding film according to at least one of the preceding claims, by
calender processing, in which case the melt index of the polypropylene copolymer is below 5 g/10 min, preferably below 1 g/10 min and in particular below 0.7 g/10 min,
and/or
extrusion processing, in which case the melt index of the polypropylene copolymer is between 1 and 20 g/10 min, in particular between 5 and 15 g/10 min.

13. Process for producing a winding film of at least one of the preceding claims,
**characterized in that**
• the winding film is wound to logs, which then, to increase the unwind force, are heat-treated and subsequently slit into rolls, the unwind force of the material thus produced at 300 mm/min being higher preferably by at least 50% than without such a measure, or
• the winding film, for the purpose of increasing the unwind force, is subjected to a flame or corona treatment or is provided with a polar coextrusion layer and is subsequently processed into rolls, the unwind force of the material thus produced at 300 mm/min being higher preferably by at least 50% than without such a measure, or
• the winding film is slit by a process which leads, as a result of rough slit edges, to easier hand tearability, the breaking elongation of the winding-film rolls thus slit being lower preferably by at least 30% than in the case of slitting with sharp blades,
• the winding film is slit by a process which leads, as a result of rough slit edges, to easier hand tearability, the breaking elongation of the winding-film rolls thus slit being preferably in the range from 200 to 500%,
• the winding film is slit on an automatic slitter with defined knife advancement speed,
• the winding film is wound on a core with an inside diameter of 30 to 40 mm, preferably of board.

14. Use of a winding film according to at least one of the preceding claims for bundling, protecting, labeling, insulating or sealing ventilation pipes or wires or cables and for sheathing cable harnesses in vehicles or field coils for picture tubes.

## Revendications

1. Rouleau d'enroulement en copolymère de propylène, d'une épaisseur de 30 à 180 µm, dans lequel la force dans le sens de la longueur à un allongement de 1% présente une valeur de 0,6 à 4 N/cm et la force à 100% d'allongement une valeur de 2 à 20 N/cm, le point de fusion des cristallites du copolymère de propylène est inférieur à 166°C et la teneur en agent d'ignifugation est d'au moins 40 phr.

2. Film d'enroulement selon la revendication 1, **caractérisé en ce que** l'épaisseur du film d'enroulement est de 50 à 150 µm et en particulier de 55 à 100 µm, la force dans le sens de la longueur à un allongement de 1% est de 1 à 3 N/cm et/ou la force à un allongement de 100% est de 3 à 10 N/cm.

3. Film d'enroulement selon la revendication 1 ou 2, **caractérisé en ce que** le film d'enroulement présente au moins un copolymère de propylène dont le module de flexion est inférieur à 500 MPa, de préférence de 80 ou moins et de façon particulièrement préférable de 30 MPa ou moins, et/ou un point de fusion des cristallites inférieur à 148°C, de préférence inférieur à 145°C et de façon particulièrement préférable dans la plage de 120°C à 166°C.

4. Film d'enroulement selon au moins l'une quelconque des revendications 1 à 3, **caractérisé en ce que** le copolymère de propylène est créé dans un procédé dans lequel on fait réagir avec de l'éthylène et du propylène un homopolymère de PP ou un copolymère statistique de PP.

5. Film d'enroulement selon au moins l'une quelconque des revendications précédentes, **caractérisé en ce qu'**il est exempt de phosphore rouge et **en ce que** de préférence sa teneur en phosphore lié chimiquement ne dépasse pas 0,5 phr.

6. Film d'enroulement selon au moins l'une quelconque des revendications précédentes, **caractérisé en ce que** le film d'enroulement est revêtu sur une ou sur ses deux faces et en particulier sur une face par une couche d'adhésif qui est de préférence à base de polyisoprène, d'un copolymère d'éthylène et d'acétate de vinyle et/ou de polyacrylate, et présente éventuellement une couche de fond entre le film et la couche adhésive, la couche adhésive représentant de 10 à 40 g/m² et de préférence de 18 à 28 g/m², la force d'adhérence sur l'acier étant de 1,5 à 3 N/cm, la force de déroulement à une vitesse de déroulement de 300 mm/min étant de 1,2 à 6,0 N/cm, de préférence de 1,6 à 4,0 N/cm et de façon particulièrement préférable de 1,8 à 2,5 N/cm, et/ou le pouvoir de retenue est supérieur à 150 min.

7. Film d'enroulement selon au moins l'une quelconque des revendications précédentes, **caractérisé en ce que** le film d'enroulement présente une pâte adhésive exempte de solvant qui est formée par co-extrusion, application à l'état fondu ou application en dispersion, de préférence un adhésif en dispersion et en particulier un adhésif en dispersion à base de polyacrylate, cette pâte adhésive étant reliée à la surface du film de support au moyen d'un pré-traitement à la flamme ou corona ou d'une couche de renforcement d'adhérence qui est appliquée par coextrusion ou par revêtement.

8. Film d'enroulement selon au moins l'une quelconque des revendications précédentes, **caractérisé en ce que** la charge d'ignifugation est ajoutée à raison de 70 à 200 phr et de préférence de 110 à 150 phr et est en particulier un hydroxyde de magnésium.

9. Film d'enroulement selon au moins l'une quelconque des revendications précédentes, **caractérisé en ce que** la teneur en noir de carbone est d'au moins 5 phr, de préférence d'au moins 10 phr, le noir de carbone présentant de préférence un pH compris entre 6 et 8.

10. Film d'enroulement selon au moins l'une quelconque des revendications précédentes, **caractérisé en ce que** le film d'enroulement est exempt de plastifiant ou **en ce que** la teneur en plastifiant est suffisamment basse pour que son indice de buée soit supérieur à 90%.

11. Procédé de fabrication d'un film d'enroulement selon au moins l'une quelconque des revendications précédentes, **caractérisé en ce que** le mélange est réalisé dans un pétrin ou une extrudeuse de façon suffisamment poussée pour que le film préparé à partir du mélange présente une tension de claquage d'au moins 3 kV/100 µm et de préférence d'au moins 5 kV/100 µm, dans lequel la charge d'ignifugation n'est pas ajoutée en une fois mais au moins en deux portions lors de la préparation du mélange et/ou **en ce que** le mélange est apporté à l'état fondu, sans étape intermédiaire sous forme solide, à la réalisation du film par extrusion ou calandrage.

12. Procédé de fabrication d'un film d'enroulement selon au moins l'une quelconque des revendications précédentes, par traitement de calandrage, l'indice d'écoulement du copolymère de propylène à l'état fondu étant inférieur à 5 g/10 min, de préférence inférieur à 1 g/10 min et en particulier inférieur à 0,7 g/10 min et/ou par traitement d'extrusion, l'indice d'écoulement du copolymère de propylène à l'état fondu étant compris entre 1 et 20 g/10 min et en particulier entre 5 et 15 g/10 min.

13. Procédé de fabrication d'un film d'enroulement selon au moins l'une quelconque des revendications précédentes, dans lequel:
- le film d'enroulement est enroulé en larges rouleaux qui sont ensuite traités thermiquement pour augmenter la force de déroulement et enfin découpé en rouleaux, la force de déroulement à 300 mm/min du matériau ainsi préparé étant de préférence d'au moins 50% supérieure à celle obtenue sans cette disposition, ou
- le film d'enroulement subit un traitement à la flamme ou corona pour augmenter sa force de déroulement ou est doté d'une couche polaire par coextrusion et est ensuite transformé en rouleaux, la force de déroulement à 300 mm/min du matériau ainsi préparé étant de préférence d'au moins 50% supérieure à celle obtenue sans cette disposition, ou
- le film d'enroulement est découpé par une opération qui entraîne une meilleure aptitude à la déchirure à la main grâce à des bords de coupe rugueux, l'allongement à la rupture du rouleau de film d'enroulement ainsi découpé étant de préférence d'au moins 30% inférieur à celui obtenu suite à une découpe à l'aide de lames tranchantes,
- le film d'enroulement est découpé par une opération qui améliore l'aptitude à la déchirure à la main grâce à des bords de coupe rugueux, l'allongement à la rupture du rouleau de film d'enroulement ainsi découpé étant de préférence compris dans la plage de 200 à 500%,
- le film d'enroulement est découpé sur un automate de perforation à une vitesse définie d'avancement des couteaux,
- le film d'enroulement est enroulé sur une âme d'un diamètre intérieur de 30 à 40 mm, de préférence en carton.

14. Utilisation d'un film d'enroulement selon au moins l'une quelconque des revendications précédentes pour emballer, protéger, caractériser, isoler ou rendre étanche des conduits d'aération ou des fils ou câbles, et pour enrouler des jeux de câbles dans des véhicules ou dans des bobines d'induction pour tubes d'image.
